# EUROPEAN PATENT APPLICATION

(11) **EP 4 579 819 A1**
(43) Date of publication of application: **02.07.2025**
(21) Application number: 24222961.5
(22) Date of filing: 23.12.2024
(51) Int. Cl.: H01M 4/62, H01M 4/66, H01M 10/0562

(54) **SUB-ASSEMBLY FOR ELECTRODE-SOLID ELECTROLYTE, ALL-SOLID-STATE BATTERY INCLUDING THE SAME, METHOD OF PREPARING THE ALL-SOLID-STATE BATTERY**

(30) Priority: 28.12.2023 KR 20230195606
(71) Applicant: Samsung Electronics Co., Ltd., Suwon-si, Gyeonggi-do 16677 (KR)
(72) Inventor: LEE, Myungjin, Suwon-si 16678 (KR); KANG, Hyunbum, Suwon-si 16678 (KR); ROEV, Victor, Suwon-si 16678 (KR); JUNG, Changhoon, Suwon-si 16678 (KR); KIM, Jusik, Suwon-si 16678 (KR); LEE, Gaehwang, Suwon-si 16678 (KR)
(74) Representative: Elkington and Fife LLP

(57) **Abstract**

A sub-assembly for an electrode-solid electrolyte, an all-solid-state battery comprising the same, and a method of preparing the all-solid-state battery. The electrode-solid electrolyte sub-assembly includes an electrode including a porous current collector having a first side and an opposite second side; an elastic layer including an elastic polymer and disposed on the first side of the porous current collector; and a solid electrolyte disposed on the opposite second side of the porous current collector. The porous current collector includes a plurality of internal pores and the elastic polymer is disposed in at least one internal pore of the plurality of internal pores of the porous current collector.

## Description

### FIELD OF THE INVENTION

The disclosure relates to a sub-assembly for an electrode-solid electrolyte, an all-solid-state battery including the same, and a method of preparing the all-solid-state battery.

### BACKGROUND OF THE INVENTION

All-solid-state batteries with solid electrolytes instead of flammable organic solvent electrolytes have been proposed to provide batteries with high energy density and improved safety.

In an all-solid-state battery, the thickness of an anode active material layer typically changes during charging and discharging. As a result, the ion conduction path and electron conduction path of the all-solid-state battery may be damaged, leading to a deterioration in charging and discharging characteristics, such as Coulombic efficiency.

In order to solve these problems in the charging and discharging process, attempts have been made to relieve the internal pressure that occurs during deposition/desorption of lithium. For example, a thick buffer layer can be included on each of an anode and a cathode on the outside of an all-solid-state battery. However, such modifications can increase the difficulty of attaining high energy density due to the increase in overall volume in the cell design of an all-solid-state battery.

Therefore, a need remains for a sub-assembly of an electrode-solid electrolyte with a structure that provides excellent contact between an electrode and a solid electrolyte and superior charge/discharge characteristics such as discharge capacity and lifespan characteristics, and a method of preparing an all-solid-state battery including the same.

### SUMMARY OF THE INVENTION

Provided is a sub-assembly for an electrode-solid electrolyte, which maintains excellent contact between the porous current collector and the electrode active material (during charging), has low interfacial resistance, and has superior charging and discharging characteristics, such as discharge capacity and lifespan characteristics.

Provided is an all-solid-state battery including the sub-assembly for an electrode-solid electrolyte.

Provided is a method of preparing the all-solid-state battery.

Additional aspects will be set forth in part in the description which follows and, in part, will be apparent from the description, or may be learned by practice of the presented embodiments of the disclosure.

According to an aspect of the disclosure, a sub-assembly for an electrode-solid electrolyte includes an electrode including a porous current collector having a first side and an opposite second side,
an elastic layer including an elastic polymer and disposed on the first side of the porous current collector, and
a solid electrolyte disposed on the opposite second side of the porous current collector,
wherein the porous current collect comprises a plurality of internal pores and the elastic polymer is disposed in at least one internal pore of the plurality of internal pores of the porous current collector.

According to an embodiment, the porous current collector may have a porosity of about 10 % by volume to about 99 % by volume, based on a total volume of the porous current collector, and may have an average pore diameter of about 0.1 micrometers (µm) to about 100 µm.

According to an embodiment, the porous current collector may be a three-dimensional porous current collector having a pore diameter S and an interval I between two adjacent pores, and a ratio S/I of the pore diameter to the interval may be about 0.1 to about 0.9.

According to an embodiment, a horizontal cross-sectional shape of at least one of the pores of the three-dimensional porous current collector may be circular, oval, triangular, square, rectangular, or hexagonal.

According to an embodiment, the porous current collector may include copper, nickel, silver, aluminum, stainless steel, titanium, iron, chromium, cobalt, or a combination thereof.

According to an embodiment, the elastic polymer may have a Young's modulus of about 1 megapascals (MPa) to about 50 MPa as measured in accordance with DMA (Dynamic Mechanical Analysis).

According to an embodiment, the elastic polymer may include a copolymer having at least one hard structural unit and at least one soft structural unit, and
a weight ratio of the hard structural unit to the soft structural unit may be about 0.1 to about 1.

According to an embodiment, the hard structural unit may include a styrene structural unit, a urethane structural unit, an ether structural unit, or a combination thereof, and the soft structural unit may include an ethylene structural unit, a propylene structural unit, a butylene structural unit, an isobutylene structural unit, a butadiene structural unit, an isoprene structural unit, or a combination thereof.

According to an embodiment, the elastic polymer may include styrene-butadiene rubber (SBR), styrene-ethylene-butylene-styrene (SEBS) rubber, styrene-ethylene-propylene-styrene (SEPS) rubber, styrene-butadiene-styrene (SBS) rubber, and styrene-isoprene-styrene (SIS) rubber, styrene-isobutylene-styrene (SIBS) rubber, or a combination thereof.

According to an embodiment, the elastic polymer may be disposed in the plurality of internal pores in a content of about 10 % by volume to about 90 % by volume based on the total volume of the plurality of internal pores of the porous current collector.

According to an embodiment, the elastic polymer may be disposed in the plurality of internal pores with a concentration gradient decreasing in a direction from the first side to the opposite second side of the porous current collector, and the elastic polymer may be disposed in the plurality of internal pores at about 55 % by volume to about 85 % by volume based on the total volume of the plurality of internal pores of the porous current collector.

According to an embodiment, the elastic polymer may further include an electronically conductive material having a conductivity of at least 10⁻² siemens per centimeter.

According to an embodiment, the electronically conductive material may include carbon nanotubes, carbon nanofibers, carbon nanowires, carbon nanoparticles, or a combination thereof.

According to an embodiment, the electrode-solid electrolyte sub-assembly may further comprise a metal layer disposed between the first side of the porous current collector and the elastic layer.

According to an embodiment, an intermediate layer may be disposed between the opposite second side of the porous current collector and the solid electrolyte and the intermediate layer may include a carbon-containing material, a mixture of the carbon-containing material and one or more of a metal or a metalloid, a composite of the carbon-containing material and one or more of the metal or the metalloid, or a combination thereof.

According to an embodiment, the carbon-containing materials may include amorphous carbon, and the metal and the metalloid may include indium, silicon, gallium, tin, aluminum, titanium, zirconium, niobium, germanium, antimony, bismuth, gold, platinum, palladium, magnesium, silver, zinc, nickel, iron, cobalt, chromium, cesium, sodium, potassium, calcium, yttrium, tantalum, hafnium, barium, vanadium, strontium, lanthanum, or a combination thereof.

According to an embodiment, a thickness of the elastic layer may be about 10 micrometers (µm) to about 100 µm.

According to an embodiment, a combined thickness of the porous current collector and the elastic layer may be about 20 µm to about 100 µm.

According to another aspect of the disclosure, an all-solid-state battery includes the electrode-solid electrolyte sub-assembly, wherein the electrode is an anode and a cathode, wherein the solid electrolyte is interposed between the anode and the cathode.

According to another aspect of the disclosure, a method of preparing an all-solid-state battery includes providing a porous current collector having a first side and an opposite second side, wherein the porous current collector comprises a plurality of internal pores; disposing an elastic polymer containing composition on the first side of the porous current collector to from a coated current collector; drying the coated current collect to form an elastic layer including an elastic polymer and disposed on the first side of the porous current collector to prepare a porous current collector-elastic layer electrode including the elastic polymer, wherein the elastic polymer is disposed in at least one internal pore of the plurality of internal pores and the porous current collector-elastic layer electrode is an anode; providing a solid electrolyte; disposing the solid electrolyte on the opposite second side of the porous current collector of the porous current collector-elastic layer electrode to prepare an electrode-solid electrolyte sub-assembly; and disposing a cathode on the porous current collector on the opposite side of the solid electrolyte of the electrode-solid electrolyte sub-assembly to prepare the all-solid-state battery.

According to an embodiment, the step of providing the porous current collector may be performed using laser drilling or punching.

According to an embodiment, after the step of preparing the porous current collector-elastic layer electrode, a step of placing an intermediate layer on the opposite second side of the porous current collector may be further included, wherein the intermediate layer may include a carbon-containing material, a mixture of the carbon-containing material and one or more of a metal or a metalloid, a composite of the carbon-containing material and one or more of the metal, or the metalloid, or a combination thereof.

According to an embodiment, the solid electrolyte may have undergone surface treatment.

According to an embodiment, a step of disposing a metal layer on the first side of the porous current collector to prepare a metal layer before disposing an elastic polymer-containing composition on the first side of the porous current collector may be further included.

According to an embodiment, a method of preparing an electrode-solid electrolyte subassembly, the method including: providing a porous current collector having a first side and an opposite second side, wherein the porous current collector comprises a plurality of internal pores; disposing an elastic polymer containing composition on the first side of the porous current collector to form a coated current collector; drying the coated current collector to form an elastic layer comprising an elastic polymer and disposed on the first side of the porous current collector to prepare a porous current collector-elastic layer electrode including the elastic polymer, wherein the elastic polymer is disposed in at least one internal pore of the plurality of internal pores; providing a solid electrolyte; and disposing the solid electrolyte on the opposite second side of the porous current collector of the porous current collector-elastic layer electrode to prepare an electrode-solid electrolyte sub-assembly.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a schematic diagram of an embodiment of a sub-assembly for an electrode-solid electrolyte;
FIG. 2 is a schematic diagram of an embodiment of a sub-assembly for an electrode-solid electrolyte;
FIG. 3 is a top view of an embodiment of a porous current collector;
FIG. 4 is a schematic diagram of an embodiment of an all-solid-state secondary battery including a sub-assembly for an electrode-solid electrolyte;
FIGS. 5A and 5B are scanning electron micrographs of three-dimensional porous anode current collectors of anode-solid electrolyte sub-assemblies obtained by disassembling the all-solid-state secondary batteries prepared in Example 1 and Example 2, respectively;
FIG. 6A is a graph of imaginary impedance (ohms-square centimeters, Ωcm²) versus real impedance (ohms-square centimeters, Ωcm²) for the all-solid-state secondary batteries prepared in Example 1, Example 2, Comparative Example 1 and Comparative Example 2;
FIG. 6B is a graph of imaginary impedance (ohms-square centimeters, Ωcm²) versus real impedance (ohms-square centimeters, Ωcm²) for the all-solid-state secondary batteries prepared in Example 1, Example 2, and Comparative Example 1 of FIG. 6A;
FIG. 7A is a graph of voltage (volts) versus capacity per unit area (milliampere-hours per square centimeter, mAh/cm²) for the charging/discharging test results for the all-solid-state secondary battery prepared in Example 1;
FIG. 7B is a graph of voltage (volts) versus capacity per unit area (milliampere-hours per square centimeter, mAh/cm²) for the charging/discharging test results for the all-solid-state secondary batteries prepared in Comparative Examples 1 and 2;
FIG. 8 is a graph of capacity per unit area (milliampere-hours per square centimeter, mAh/cm²) versus cycles (times) for the charging/discharging tests up to 40 cycles for the all-solid-state secondary batteries prepared in Example 1 and Comparative Example 1;
FIG. 9A is an optical micrograph at two-fold magnification for a state, before charging, of the surface of a laser-drilled copper form three-dimensional porous anode current collector in the all-solid-state secondary battery prepared in Example 1; and
FIGS. 9B and 9C are optical micrographs at two-fold magnification for a state of the surface of a laser-drilled copper form three-dimensional porous anode current collector in the all-solid-state secondary battery shown in FIG. 9A, after charging and discharging the all-solid-state secondary battery once at 0.2 C and disassembling as described in Evaluation Example 5.

### DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, as the present invention allows for various changes and numerous embodiments, particular embodiments will be illustrated in the drawings and described in detail in the detailed description. However, this is not intended to limit the present invention to particular modes of practice, and it is to be appreciated that all changes, equivalents, and substitutes that do not depart from the technical scope are encompassed in the present invention.

The terms used herein are merely used to describe particular embodiments, and are not intended to limit the present inventive concept. As used herein, the singular forms include the plural forms including "at least one" as well, unless the context clearly indicates otherwise.

It will be understood that when an element is referred to as being "on" another element, it can be directly on the other element or intervening elements may be present therebetween. In contrast, when an element is referred to as being "directly on" another element, there are no intervening elements present.

Expressions such as "at least one kind of," "one or more kinds of," or "one or more" when preceding a list of elements, modify the entire list of elements and do not modify the individual elements of the list. As used herein, the term "combination" includes mixtures, alloys, reaction products, etc., unless specifically stated otherwise. As used herein, the term "including" means that other components may be further included rather than excluding other components, unless specifically stated otherwise. In this specification, terms such as "first," "second," and the like do not indicate order, quantity, or importance, but are used to distinguish one element from another element. Unless otherwise indicated herein or clearly contradicted by context, it should be construed that both the singular and the plural are included. Unless otherwise specified, "or" means "and/or".

Throughout the present specification, "one embodiment," "embodiments," etc. may mean that a particular element described in connection with embodiments is included in at least one embodiment described herein and may or may not exist in other embodiments. In addition, it should be understood that the elements listed may be combined in any suitable way in various embodiments.

Unless otherwise stated, all percentages, parts, ratios, etc. are by weight. In addition, when an amount, concentration, or other value or parameter is given either as a range, a preferred range, or a list of upper and lower preferred values, this is to be understood as specifically disclosing all ranges formed from any pair of any upper range limit or preferred value and any lower range limit or preferred value, regardless of whether the ranges are separately disclosed.

When a range of numerical values is stated herein, unless otherwise stated, the range is intended to include the endpoints and all integers and fractions within the range. The scope of the invention is not intended to be limited to the specific values recited when defining the scope.

Unless otherwise specified, the unit "part by weight" refers to the weight ratio between respective components, and the unit "part by mass" refers to the value obtained by converting the weight ratio between the respective components into solid content.

Furthermore, relative terms, such as "lower" or "bottom" and "upper" or "top," may be used herein to describe one element's relationship to another element as illustrated in the Figures. It will be understood that relative terms are intended to encompass different orientations of the device in addition to the orientation depicted in the Figures. For example, if the device in one of the figures is turned over, elements described as being on the "lower" side of other elements would then be oriented on "upper" sides of the other elements. The term "lower," can therefore, encompass both an orientation of "lower" and "upper," depending on the particular orientation of the figure. Similarly, if the device in one of the figures is turned over, elements described as "below" or "beneath" other elements would then be oriented "above" the other elements. The terms "below" or "beneath" can, therefore, encompass both an orientation of above and below.

As used herein, "about" includes the stated value and means within the range of acceptable deviations from a particular value as determined by a person skilled in the art, taking into account the errors associated with the measurement and the measurement of a particular quantity (i.e., the limit of measurement system). For example, "about" may mean within one or more standard deviations, or within ± 30 %, 20 %, 10 %, or 5 % of a specified value.

Unless otherwise defined, all terms (including technical terms and scientific terms) used in this specification have the same meaning as commonly understood by a person skilled in the art to which the disclosure pertains. In addition, it will be understood that terms such as terms defined in commonly used dictionaries should be construed as having a meaning consistent with that meaning in the context of the related art and the disclosure, and should not be construed as idealized. In addition, it should not be interpreted in an overly formal sense.

Unless otherwise defined, an elastic layer refers to include material having the property of changing volume and shape when a force is applied to an object and then returning to its original shape when the force is removed.

Unless otherwise defined, internal pores refer to pores located inside the object or material.

Exemplary implementations are described herein with reference to cross-sectional views, which are schematic diagrams of idealized embodiments. Accordingly, the example shapes may vary, for example as a result of manufacturing techniques and/or tolerances. Accordingly, the embodiments described herein should not be construed as being limited to the specific shape of the region described herein, but should include deviations in shape that occur, for example, during manufacturing. For example, the regions illustrated or described as being flat may generally have rough and/or non-linear features. In addition, the illustrated acute angles may be round.

Accordingly, the regions illustrated in the drawings are schematic in nature and the shapes are not intended to illustrate the exact shape of the regions or to limit the scope of the claims.

It is generally known that a buffer layer of a sub-assembly for an electrode-solid electrolyte is located on both sides of a current collector, is located to surround the current collector, or is located on the surface of an electrode in contact with a solid electrolyte. However, in the design of the buffer layer, the internal pressure generated when an all-solid-state battery is driven is not uniform, which reduces charging and discharging characteristics, and at the same time, the thickness of the cell may change, increasing the difficulty of attaining high energy density.

In addition, an all-solid-state battery having a "Li-free" (or anode-free) structure in an initial or fully discharged state undergoes repeated lithium deposition and lithium desorption processes during charging and discharging. As a result, voids can form between an anode and a solid electrolyte layer and the interfacial resistance may increase.

A sub-assembly for an electrode-solid electrolyte, an all-solid-state battery including the same, and a method of preparing the all-solid-state battery are disclosed which address the above-mentioned issues.

A sub-assembly for an electrode-solid electrolyte, an all-solid-state battery including the same, and a method of preparing the all-solid-state battery will be described in more detail through exemplary embodiments. Sub-assembly 100 for Electrode-Solid Electrolyte

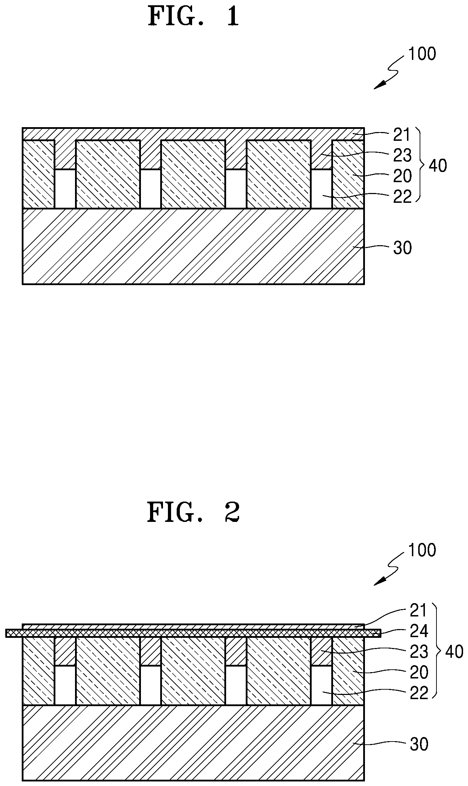

FIG. 1 is a schematic diagram of a sub-assembly for an electrode-solid electrolyte 100 according to an embodiment. FIG. 2 is a schematic diagram of a sub-assembly for an electrode-solid electrolyte 100 according to another embodiment.

The electrode-solid electrolyte sub-assembly 100 shown in FIGS. 1 and 2 has a "Li-free" structure in an initial state or fully discharged state. The electrode-solid electrolyte sub-assembly 100 according to an embodiment may be an anode-solid electrolyte sub-assembly. An anode 40 can include a porous current collector 20 having a first side (opposite to the solid electrolyte) and an opposite second side (solid electrolyte side), and an elastic layer 21 including an elastic polymer 23 and disposed on the first side of the porous current collector 20, and the elastic polymer 23 can be disposed in at least one internal pore of the plurality of internal pores 22 of the porous current collector 20. A solid electrolyte 30 can be disposed on the opposite second side of the porous current collector 20.

The porous current collector 20 according to an embodiment may have a porosity of about 10 % to about 99 % by volume based on the total volume of the porous current collector and an average pore diameter of about 0.1 µm to about 100 µm. For example, the porous current collector 20 may have a porosity of about 15 % to about 90 % by volume, about 20 % to about 85 % by volume, about 25 % to about 80 % by volume, or about 30 % to about 80 % by volume based on the total volume of the porous current collector, and an average pore diameter of about 0.1 µm to about 100 µm, about 0.5 µm to about 100 µm, about 0.8 µm to about 100 µm, about 1 µm to about 90 µm, about 1 µm to about 80 µm, about 1 µm to about 70 µm, about 1 µm to about 60 µm, about 1 µm to about 50 µm, about 5 µm to about 40 µm, or about 8 µm to about 30 µm. When the porosity and average pore diameter of the porous current collector 20 are within the range stated above, deposition/desorption of lithium from the anode during charging and discharging of an all-solid-state battery is easy, and lithium can be deposited uniformly into the pores.

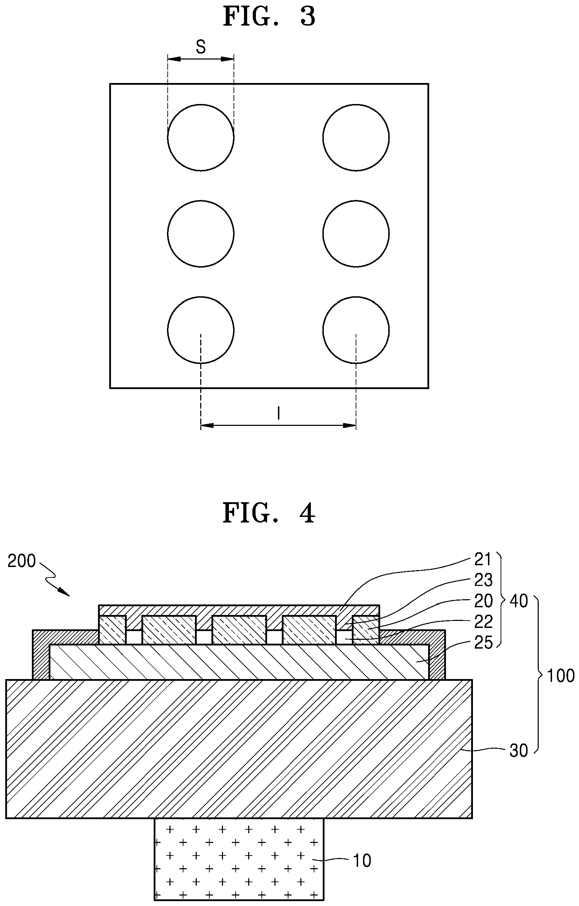

In this specification, when the cross-sectional shape of the pore is spherical, the average pore diameter refers to an average pore diameter S, as shown in FIG. 3. If the pores are not spherical, the average pore diameter refers to the length of the major axis. In embodiments of the disclosure, the average pore diameter can be measured by using a Brunauer-Emmett-Teller (BET) method. The BET method is disclosed in Brunauer, Stephen; Emmett, P. H.; Teller, Edward (1938). "Adsorption of Gases in Multimolecular Layers," Journal of the American Chemical Society. 60 (2): 309-319. In addition, the average pore diameter can also be evaluated through image analysis using scanning electron microscopy.

The porous current collector 20 according to the exemplary embodiment is a three-dimensional porous current collector and may have a patterned pore interval with a pore diameter S (e.g., an average pore diameter) and an interval I between two adjacent pores, and the ratio S/I of the pore diameter to the interval may be 0.1 to 0.9, 0.1 to 0.8, 0.1 to 0.7, 0.1 to 0.6, 0.2 to 0.5, 0.25 to 0.5, or 0.4 to 0.5. For example, the distance I between two adjacent pores means the distance between the centers of the two adjacent pores. For example, the porous current collector 20 may have a regular pattern with a pore diameter S and an interval I between two adjacent pores. For example, each of the pores may have the shape of a through hole. Compared to a two-dimensional porous current collector, a three-dimensional porous current collector may have a higher electrode active material volume fraction and a larger reaction area, and thus can increase the capacity and energy density of an all-solid-state battery containing the same. If the ratio S/I of the pore diameter to the interval between pores of the porous current collector 20 is in the above range, excellent contact can be maintained between the porous current collector and an anode active material (during charging), thereby providing an all-solid-state battery having low interfacial resistance and excellent charging and discharging characteristics.

In the porous current collector 20 according to the exemplary embodiment, the horizontal cross-sectional shape of at least one of the pores 22 of the three-dimensional porous current collector may be circular, oval, triangular, square, rectangular, or hexagonal. However, the horizontal cross-sectional shape of the pores 22 of the three-dimensional porous current collector is not limited thereto.

The porous current collector 20 according to the exemplary embodiment may include copper, nickel, silver, aluminum, stainless steel, titanium, iron, chromium, cobalt, or a combination thereof. The porous current collector 20 may be made of an alloy or mixture of one or two or more of the metals listed above. However, the material for porous current collector 20 is not limited thereto, and any material used as an electrode current collector in the relevant technical field can be used.

The thickness of the porous current collector 20 according to the exemplary embodiment may be, but not limited to, for example, 5 µm to 100 µm, 10 µm to 100 µm, or 10 µm to 50 µm. If the thickness of the porous current collector 20 is within the range exemplified above, an all-solid-state battery having improved energy density and lifespan characteristics can be provided.

The elastic polymer according to the exemplary embodiment may have a Young's modulus of 1 MPa to 50 MPa as measured in accordance with DMA (Dynamic Mechanical Analysis). The elastic polymer 23 can have a stretchability to be stretched in a predetermined direction and restored again. In addition, the elastic polymer 23 may flexibly respond to external forces applied from a certain direction. The all-solid-state battery including the elastic polymer 23 may flexibly respond to a change in the thickness during charging and discharging, facilitating deposition/desorption of lithium. In an embodiment, the all-solid-state battery does not contain a thick exterior material, which may provide a high energy density.

Examples of the elastic polymer 23 may be a thermoplastic elastic polymer, a thermosetting elastic polymer, or a combination thereof, and may include a plurality of identical or different structural units.

The elastic polymer 23 according to the exemplary embodiment may be a thermoplastic elastic polymer. For example, a thermoplastic elastomeric polymer may include a copolymer having at least one hard structural unit that provides relatively hard properties and at least one soft structural unit that provides relatively soft properties. The hard structural unit may provide plastic properties such as, for example, high-temperature performance, thermoplastic processability, tensile strength, and tear strength. The soft structural unit may provide elastomeric properties such as, for example, low-temperature performance, hardness, flexibility, and tension/compression. The hard structural units and soft structural units may be arranged alternately or in clusters or blocks, respectively, within the elastic polymer.

In the elastic polymer 23 according to the exemplary embodiment, the weight ratio of the hard structural unit to the soft structural unit may be 0.1 to 1. Alternatively, the elastic polymer 23 may have a soft structural unit amount of 50 weight percent (wt%) or more of the total weight of the soft structural unit and the hard structural unit. When the weight ratio of the hard structural unit to the soft structural unit of the elastic polymer 23 is within the range stated above, the all-solid-state battery comprising the same can flexibly respond to a change in the thickness during charging and discharging, facilitating deposition/desorption of lithium, and can have excellent charging and discharging characteristics.

The hard structural unit according to the exemplary embodiment may include a styrene structural unit, a urethane structural unit, an ether structural unit, or a combination thereof.

The soft structural unit according to the exemplary embodiment may include an ethylene structural unit, a propylene structural unit, a butylene structural unit, an isobutylene structural unit, a butadiene structural unit, an isoprene structural unit, or a combination thereof.

For example, the hard structural unit may be a styrene structural unit, and the soft structural unit may include an ethylene structural unit, a propylene structural unit, a butylene structural unit, an isobutylene structural unit, a butadiene structural unit, an isoprene structural unit, or a combination thereof.

The elastic polymer 23 according to the exemplary embodiment may include styrene-butadiene rubber (SBR), styrene-ethylene-butylene-styrene (SEBS) rubber, styrene-ethylene-propylene-styrene (SEPS) rubber, styrene-butadiene-styrene (SBS) rubber, styrene-isoprene-styrene (SIS) rubber, styrene-isobutylene-styrene (SIBS) rubber, or a combination thereof. For example, the elastic polymer 23 may include styrene-ethylene-butylene-styrene (SEBS) rubber, styrene-ethylene-propylene-styrene (SEPS) rubber, styrene-butadiene-styrene (SBS) rubber, or a combination thereof.

The elastic polymer 23 according to the exemplary embodiment may be disposed in at least one internal pore of the plurality of internal pores of the porous current collector 20 in a content of about 10 % by volume to about 90 % by volume, about 15 % by volume to about 89 % by volume, about 20 % by volume to about 88 % by volume, about 25 % by volume to about 88 % by volume, about 30 % by volume to about 87 % by volume, about 35 % by volume to about 86 % by volume, about 40 % by volume to about 86 % by volume, about 45 % by volume to about 86 % by volume, or about 50 % by volume to about 85 % by volume based on the total volume of the plurality of internal pores of the porous current collector. The elastic polymer 23 can maintain excellent contact between the porous current collector and the electrode active material (during charging) within the percent by volume fill of the internal pores of the porous current collector 20, thereby providing an all-solid electrolyte battery having low interfacial resistance and excellent charging and discharging characteristics. If the elastic polymer 23 is not disposed into at least one internal pore of the plurality of the internal pores of the porous current collector 20, the all-solid-state battery including the same may not flexibly respond to a change in the internal pressure during charging and discharging, making it difficult to deposit/desorb lithium.

The porous current collector 20 according to the exemplary embodiment may be filled (e.g., disposed) with the elastic polymer 23 in the plurality of internal pores a concentration gradient decreasing in a direction from the first side (opposite to the solid electrolyte) to the opposite second side (the solid electrolyte side). At least one internal pore of the plurality of internal pores may be filled at 55 % by volume to 85 % by volume based on the total volume of the plurality of internal pores 22 of the porous current collector 20. A concentration of the elastic polymer 23 in the concentration gradient may decrease in the direction from the first side to the opposite second side of the porous current collector 20. When the elastic polymer 23 is sequentially filled in the direction from the opposite second side (the solid electrolyte side) to the first side (opposite side to the solid electrolyte) of the porous current collector 20, the elastic polymer 23 may act as an insulator to prevent electrons from passing therethrough, and thus the charging and discharging characteristics of the all-solid-state battery including the same may deteriorate.

According to an embodiment, the elastic polymer 23 may further include an electronically conductive material. An "electronically conductive" material, or alternatively an "electrically conductive" material as used herein, refers to a material that conducts electricity. For example, the electronically conductive material may have a conductivity of at least 10⁻² siemens per centimeter (S/cm). The electronically conductive material may form a blend or composite with the elastic polymer 23. For example, the electronically conductive material may include carbon nanotubes, carbon nanofibers, carbon nanowires, carbon nanoparticles, or a combination thereof. For example, the electronically conductive material may include an electronically conductive polymer. Examples of the electronically conductive polymer may include poly(fluorene), polyphenylene, polypyrene, polyazulene, polynaphthalene, polyacetylene (PAC), poly(p-phenylenevinylene) (PPV), polypyrrole (PPY), polycarbazole, polyindole, polyazepine, polyaniline (PANI), polythiophene (PT), poly(3,4-ethylenedioxythiophene) (PEDOT), or poly(p-phenylene sulfide) (PPS). The electronic conductive material may act as a path for current movement and may be continuously connected by the elastic polymer 23 without being damaged by external forces or internal pressure. In addition, the electronically conductive material may maintain contact with the electrode current collector and the electrode active material (during charging), and thus the charging and discharging characteristics, such as charging/discharging efficiency and cycle characteristics, of an all-solid-state battery including the electronically conductive material can be further improved.

In the porous current collector 20 of FIG. 2 according to the exemplary embodiment, a metal layer 24 may be further included between the first side (opposite to the solid electrolyte) and the elastic layer 21. For example, metal layer 24 may be made of a material that does not react with lithium, that is, a material that does not form either an alloy or a compound. Examples of the metal layer 24 include aluminum, nickel, titanium, cobalt, stainless steel, or a combination thereof. The metal layer 24 can prevent excessive expansion of the elastic polymer 23 filled in the internal pores 22 of the porous current collector 20 during charging and discharging of the all-solid-state battery.

The metal layer 24 may be formed to a predetermined thickness. The metal layer 24 may be a deposition layer formed by thermal evaporation or may be a fine pattern having a predetermined width and length. Examples of the fine pattern may be an island-shaped, linear, or wavy form, but are not limited thereto.

According to an embodiment, an intermediate layer 25 may be further included between the second surface (the solid electrolyte side) of the porous current collector 20 and the solid electrolyte 30, and the intermediate layer 25 may include a carbon-containing material; a mixture of the carbon-containing material and one or more of a metal or a metalloid; a composite of the carbon-containing material and one or more of the metal, or the metalloid; or a combination thereof.

According to an embodiment, the carbon-containing material may include amorphous carbon, and the metal and the metalloid may include indium, silicon, gallium, tin, aluminum, titanium, zirconium, niobium, germanium, antimony, bismuth, gold, platinum, palladium, magnesium, silver, zinc, nickel, iron, cobalt, chromium, cesium, sodium, potassium, calcium, yttrium, tantalum, hafnium, barium, vanadium, strontium, lanthanum, or a combination thereof.

Examples of the amorphous carbon may include, but are not limited to, carbon black (CB), acetylene black (AB), furnace black (FB), ketjen black (KB), graphene, carbon nanotubes, or carbon nanofibers, and any one classified as amorphous carbon in the technical field can be used.

The carbon-containing material may include voids therein. Even after discharging, the carbon-containing material may include voids therein. The carbon-containing material including the voids may have reduced volume expansion during charging and discharging.

The metal and the metalloid may be in the form of particles. The average particle diameter (D50) of the metal and the metalloid may be about 4 µm or less, about 3 µm or less, about 2 µm or less, about 1 µm or less, or 0.5 µm or less. The lower limit of the average particle diameter (D50) is not particularly limited, but may be about not less than10 nanometers (nm). The average particle diameter (D50) refers to a particle size value corresponding to a point on a particle size distribution curve of 100% of the particles, where 50 % of particles are smaller than the particle size value. The average particle diameter (D50) may be measured by a method well known to those skilled in the art, for example, by using a particle size analyzer, or by measuring particles in a transmission electron micrograph or a scanning electron micrograph. Alternatively, measurements can be made using a measuring device using dynamic light-scattering, data analysis is performed to count the number of particles for each particle size range, and the average particle diameter (D50) value may then be calculated.

In the mixtures and composites stated above, the weight ratio of the carbon-containing material and the metal or the metalloid may be adjusted within the range to provide the desired characteristics of an all-solid-state battery.

The thickness of the intermediate layer 25 may be 10 nm to 10 µm, 100 nm to 10 µm, 200 nm to 10 µm, 300 nm to 10 µm, 400 nm to 10 µm, 500 nm to 10 µm, 1 µm to 10 µm, 1 µm to 9 µm, 1 µm to 8 µm, 2 µm to 7 µm m, or 3 µm to 7 µm. When the thickness of intermediate layer 25 is within this range, the charging and discharging characteristics, such as charging/discharging efficiency and cycle characteristics, of an all-solid-state battery, can be improved.

The thickness of the elastic layer 21 according to the exemplary embodiment may be 10 µm to 80 µm.

The total thickness (e.g., combined thickness) of the porous current collector 20 and the elastic layer 21 according to the exemplary embodiment may be 20 µm to 100 µm. When the total thickness of the porous current collector 20 and the elastic layer 21 is within the range stated above, the energy density of the all-solid-state battery including the same can be increased, and the charging and discharging characteristics, such as charging/discharging efficiency and cycle characteristics, can be improved.

The solid electrolyte 30 according to the exemplary embodiment may be an oxide solid electrolyte, a sulfide solid electrolyte, or a combination thereof. For example, the solid electrolyte 30 may be an oxide solid electrolyte.

The oxide solid electrolyte may be one or more of Li_{1+x+y}AlₓTi₂₋ₓSi_{y}P_{3-y}O₁₂ (where 0<x<2 and 0≤y<3), Li₃PO₄, LiₓTi_{y}(PO₄)₃ (where 0<x<2 and 0<y<3), LiₓAl_{y}Ti_{z}(PO₄)₃ (where 0<x<2, 0<y<1, and 0<z<3), Li_{1+x+y}(AlₐGa₁₋ₐ)ₓ(Ti_{b}Ge_{1-b})₂₋ₓSi_{y}P_{3-y}O₁₂ (where 0≤x≤1, 0≤y≤1, 0≤a≤1, and 0≤b≤1), LiₓLa_{y}TiO₃ (where 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (where M is Te, Nb, or Zr, and x is an integer in the range of 1 to 10). The solid electrolyte may be prepared by sintering, and forth.

For example, the oxide solid electrolyte may be a garnet solid electrolyte. As used herein, garnet is a silicate that can be referred to using the formula X₃Y₂(SiO₄)₃, wherein X is a divalent cation, and Y is a trivalent cation. As used herein, the term "garnet solid electrolyte" means that the solid electrolyte is isostructural with garnet, e.g., Mg₃Al₂(SiO₄)₃.

Non-limiting examples of the garnet solid electrolyte may include oxides represented by the following Formula 1:

Formula 1 (LiₓM1_{y})(M2)_{3-δ}(M3)_{2-ω}O_{12-z}X_{z}
wherein in Formula 1, 3≤x≤8, 0≤y<2, -0.2≤δ≤0.2, -0.2≤ω≤0.2, and 0≤z≤2,
M1 is a monovalent cation, a divalent cation, a trivalent cation, or a combination thereof,
M2 is a monovalent cation, a divalent cation, a trivalent cation, or a combination thereof,
M3 is a monovalent cation, a divalent cation, a trivalent cation, a tetravalent cation, a pentavalent cation, a hexavalent cation, or a combination thereof, and
X may be a monovalent anion, a divalent anion, a trivalent anion, or a combination thereof.

In Formula 1, examples of the monovalent cation may include Na, K, Rb, Cs, H, Fr, etc., and examples of the divalent cation may include Mg, Ca, Ba, Sr, etc. Examples of the trivalent cation may include In, Sc, Cr, Au, B, Al, Ga, etc., and examples of the tetravalent cation may include Sn, Ti, Mn, Ir, Ru, Pd, Mo, Hf, Ge, V, Si. etc. In addition, examples of the pentavalent cation may include Nb, Ta, Sb, V, P, etc.

For example, M1 may be hydrogen (H), iron (Fe), gallium (Ga), aluminum (Al), boron (B), beryllium (Be), or a combination thereof. M2 may be lanthanum (La), barium (Ba), calcium (Ca), strontium (Sr), yttrium (Y), bismuth (Bi), praseodymium (Pr), neodymium (Nd), actinium ( Ac), samarium (Sm), gadolinium (Gd), or a combination thereof, and M3 may be zirconium (Zr), hafnium (Hf), tin (Sn), niobium (Nb), titanium (Ti), vanadium (V), chromium (Cr), manganese (Mn), cobalt (Co), nickel (Ni), copper (Cu), molybdenum (Mo), tungsten (W), tantalum (Ta), magnesium (Mg) ), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof.

In Formula 1, the monovalent anion used as X may be a halogen atom, a pseudohalogen, or a combination thereof, the divalent anion may be S²⁻ or Se²⁻, and the trivalent anion may be, for example, N³⁻.

In Formula 1, 3≤x≤8, 3.3≤x≤8, 3.6≤x≤8, 6.7≤x≤7.5, or 6.8≤x≤7.1.

Non-limiting examples of the garnet solid electrolyte may include oxides represented by the following Formula 2:

Formula 2 (LiₓM1_{y})(Laₐ₁M2ₐ₂)_{3-δ}(Zr_{b1}M3_{b2})_{2-ω}O_{12-z}X_{z}

wherein in Formula 2, M1 is hydrogen (H), iron (Fe), gallium (Ga), aluminum (Al), boron (B), beryllium (Be), or a combination thereof,
M2 is barium (Ba), calcium (Ca), strontium (Sr), yttrium (Y), bismuth (Bi), praseodymium (Pr), neodymium (Nd), actinium (Ac), samarium (Sm), gadolinium (Gd), or a combination thereof,
M3 is hafnium (Hf), tin (Sn), niobium (Nb), titanium (Ti), vanadium (V), chromium (Cr), manganese (Mn), cobalt (Co), nickel (Ni), Copper (Cu), molybdenum (Mo), tungsten (W), tantalum (Ta), magnesium (Mg), technetium (Tc), ruthenium (Ru), palladium (Pd), iridium (Ir), scandium (Sc), cadmium (Cd), indium (In), antimony (Sb), tellurium (Te), thallium (Tl), platinum (Pt), silicon (Si), aluminum (Al), or a combination thereof,
3≤x≤8, 0≤y<2, -0.2≤δ≤0.2, -0.2≤ω≤0.2, and 0≤z≤2,
a1+a2=1, 0<a1≤1, and 0≤a2<1,
b1+b2=1, 0<b1 <1, and 0≤b2<1, and
X may be a monovalent anion, a divalent anion, a trivalent anion, or a combination thereof.

In Formula 2, 6≤x≤8.

In Formula 2, the monovalent anion used as X may be a halogen atom, a pseudohalogen, or a combination thereof, the divalent anion may be S²⁻ or Se²⁻, and the trivalent anion may be, for example, N³⁻.

In Formula 2, 3≤x≤8, 6.6≤x≤8, 6.7≤x≤7.5, or 6.8≤x≤7.1.

As used herein, the term "pseudohalogen" refers to a molecule including two or more electronegative atoms, which exhibits properties similar to halogens in a free state, and generates anions which resemble halide ions. Examples of the pseudohalogen may include cyanide, cyanate, thiocyanate, azide, or a combination thereof.

The halogen atom may be, for example, iodine (I), chlorine (Cl), bromine (Br), fluorine (F), or a combination thereof, and the pseudohalogen may be, for example, cyanide, cyanate, thiocyanate, azide, or a combination thereof.

The trivalent anion may be, for example, N³⁻.

In Formula 2, M3 may be Al, Ga, In, Si, Ge, Sn, Sb, Bi, Sc, Y, Ti, Hf, V, Nb, Ta, W, or a combination thereof.

For example, the garnet solid electrolyte may be an oxide represented by the following Formula 3:

Formula 3 Li₃₊ₓLa₃Zr₂₋ₐMₐO₁₂

wherein in Formula 3, M may be Al, Ga, In, Si, Ge, Sn, Sb, Bi, Sc, Y, Ti, Hf, V, Nb, Ta, W, or a combination thereof, x is a number of 1 to 10, and 0≤a<2.

The garnet solid electrolyte may include, for example, Li₇La₃Zr₂O₁₂, Li_{6.5}La₃Zr_{1.5}Ta_{0.5}O₁₂, etc.

Alternatively, the solid electrolyte may be, for example, a sulfide solid electrolyte. The sulfide solid electrolyte may be, for example, one or more of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-P₂S₅-LiI, Li₂S-B₂S₃, Li₂S-P₂S₅-ZₘSₙ (where m and n are each a positive number, and Z is Ge, Zn, or Ga), Li₂S-GeS₂, Li₂S-SiS₂-Li₃PO₄, Li₂S-SiS₂-LiₚMO_{q} (where p and q are each a positive number, and M is P, Si, Ge, B, Al, Ga, or In), Li₇₋ₓPS₆₋ₓClₓ (where 0≤x≤2), Li₇₋ₓPS₆₋ₓBrₓ (where 0≤x≤2), or Li₇₋ₓPS₆₋ₓIₓ (where 0≤x≤2). The sulfide solid electrolyte may be prepared by, for example, treating a starting material, such as Li₂S or P₂S₅, by melting quenching or mechanical milling. In addition, after the treatment, heat treatment may be performed. The sulfide solid electrolyte may be amorphous, crystalline, or in a mixed state thereof.

In addition, for example, the sulfide solid electrolyte may include, as at least constituent elements, sulfur (S), phosphorus (P), and lithium (Li), among the sulfide solid electrolyte materials listed above. For example, the sulfide solid electrolyte may be a material including Li₂S-P₂S₅. When the material including Li₂S-P₂S₅ is used as a material of the sulfide solid electrolyte, the mixing molar ratio of Li₂S and P₂S₅ may be in the range of, for example, Li₂S: P₂S₅ = 50:50 to 90:10.

The sulfide solid electrolyte may be an argyrodite compound including one or more of Li₇₋ₓPS₆₋ₓClₓ (where 0≤x≤2), Li₇₋ₓPS₆₋ₓBrₓ (where 0≤x≤2), or Li₇₋ₓPS₆₋ₓIₓ (where 0≤x≤2). The sulfide solid electrolyte included as the solid electrolyte may be an argyrodite compound including one or more of Li₆PS₅Cl, Li₆PS₅Br, or Li₆PS₅I. As used herein, argyrodite is a silver germanium sulfide mineral that can be referred to using the formula Ag₈GeS₆. As used herein, the term "argyrodite compound" means that the compound is isostructural with argyrodite. In the disclosure, the term "isostructural" refers to crystal structures of chemical compounds. The crystal structures are the same, but the cell dimensions and/or the chemical composition may not be the same.

The sulfide solid electrolytes may be in the form of powder or a molded product. The solid electrolyte in the form of a molded product may be in the form of, for example, a pellet, sheet, or thin film, but is not necessarily limited thereto and may have various forms depending on the intended use.

The solid electrolyte 30 further includes, for example, a binder. The binder included in the solid electrolyte 30 may be, for example, styrene butadiene rubber (SBR), polytetrafluoroethylene, polyvinylidene fluoride, polyethylene, etc., but is not limited thereto, and any binder used in the relevant technical field can be used. The binder of the solid electrolyte 30 may be of the same type or different from the binders of a cathode active material layer and an anode active material layer.

### All-Solid-State Battery

An all-solid-state battery according to another embodiment may include an electrode-solid electrolyte subassembly 100, a cathode 10, an anode 40, and a solid electrolyte 30 interposed therebetween. The electrode of the electrode-solid electrolyte subassembly 100 may be the anode 40 or the cathode 10. The electrode-solid electrolyte subassembly 100 may comprise the anode 40 and the solid electrolyte 30. Alternatively, the electrode-solid electrolyte sub-assembly 100 may comprise the cathode 10 and the solid electrolyte 30. Since the contents of the electrode-solid electrolyte sub-assembly 100 are the same as those described above, the following description will be omitted.

The all-solid-state battery may include a thin film multilayer battery, a multilayer ceramic battery, a lithium sulfur battery, or a lithium air battery. For example, the all-solid-state battery may be an all-solid-state secondary battery.

FIG. 4 is a schematic diagram of an all-solid-state secondary battery 200 including a sub-assembly 100 for an electrode-solid electrolyte according to an embodiment.

Referring to FIG. 4, the all-solid-state secondary battery 200 has a cathode 10 disposed below the solid electrolyte 30 of the electrode-solid electrolyte sub-assembly 100.

The cathode 10 may include a cathode current collector and a cathode active material layer.

The cathode current collector may use a metal substrate. Examples of the metal substrate may include aluminum (Al), indium (In), copper (Cu), magnesium (Mg), stainless steel, titanium (Ti), iron (Fe), cobalt (Co), nickel (Ni), zinc (Zn), germanium (Ge), lithium (Li), or alloys thereof. The cathode current collector may be in the form of a plate or foil. The cathode current collector may be omitted.

As the cathode active material of the cathode active material layer, any material that is commonly used in the field of lithium batteries may be used without limitation. For example, the cathode active material may be one or more composite oxides of lithium and a metal including cobalt, manganese, nickel, or a combination thereof, and specific examples thereof may include a compound represented by any of the formulas represented by: LiₐA_{1-b}B'_{b}D'₂ (where 0.90 ≤ a ≤ 1.8, and 0 ≤ b ≤ 0.5); LiₐE_{1-b}B'_{b}0₂-_{c}D'_{c} (where 0.90 ≤ a ≤ 1.8, 0 ≤ b ≤ 0.5, and 0 ≤ c ≤ 0.05); LiE_{2-b}B'_{b}O_{4-c}D'_{c} (where 0 ≤ b ≤ 0.5, and 0 ≤ c ≤ 0.05); LiₐNi_{1-b-c}Co_{b}B'_{c}D'_{α} (where 0.90 ≤ a ≤ 1.8, 0 ≤ b ≤ 0.5, 0 ≤ c ≤ 0.05, and 0 < α ≤ 2); LiₐNi_{1-b-c}Co_{b}B'_{c}O_{2-α}F'_{α} (where 0.90 ≤ a ≤ 1.8, 0 ≤ b ≤ 0.5, 0 ≤ c ≤ 0.05, and 0 < α < 2); LiₐNi_{1-b-c}Co_{b}B'_{c}O_{2-α}F'₂ (where 0.90 ≤ a ≤ 1.8, 0 ≤ b ≤ 0.5, 0 ≤ c ≤ 0.05, and 0 < α < 2); LiₐNi_{1-b-c}Mn_{b}B'_{c}D'_{α} (where 0.90 ≤ a ≤ 1.8, 0 ≤ b ≤ 0.5, 0 ≤ c ≤ 0.05, and 0 < α ≤ 2); LiₐNi_{1-b-c}Mn_{b}B'_{c}O_{2-α}F'_{α} (where 0.90 ≤ a ≤ 1.8, 0 ≤ b ≤ 0.5, 0 ≤ c ≤ 0.05, and 0 < α < 2); LiₐNi_{1-b-c}Mn_{b}B'_{c}O_{2-α}F'₂ (where 0.90 ≤ a ≤ 1.8, 0 ≤ b ≤ 0.5, 0 ≤ c ≤ 0.05, and 0 < α < 2); LiₐNi_{b}E_{c}G_{d}O₂ (where 0.90 ≤ a ≤ 1.8, 0 ≤ b ≤ 0.9, 0 ≤ c ≤ 0.5, and 0.001 ≤ d ≤ 0.1); LiₐNi_{b}Co_{c}Mn_{d}GₑO₂ (where 0.90 ≤ a ≤ 1.8, 0 ≤ b ≤ 0.9, 0 ≤ c ≤ 0.5, 0 ≤ d ≤0.5, and 0.001 ≤ e ≤ 0.1); LiₐNiG_{b}O₂ (where 0.90 ≤ a ≤ 1.8 and 0.001 ≤ b ≤ 0.1); LiₐCoG_{b}O₂ (where 0.90 ≤ a ≤ 1.8 and 0.001 ≤ b ≤ 0.1); LiₐMnG_{b}O₂ (where 0.90 ≤ a ≤ 1.8 and 0.001 ≤ b ≤ 0.1); LiₐMn₂G_{b}O₄ (where 0.90 ≤ a ≤ 1.8 and 0.001 ≤ b ≤ 0.1); QO₂; QS₂; LiQS₂; V₂O₅; LiV₂O₂; LiI'O₂; LiNiVO₄; Li_{(3-f)}J₂(PO₄)₃ (where 0 ≤ f ≤ 2); Li_{(3-f)}Fe₂(PO₄)₃ (where 0 ≤ f ≤ 2); or LiFePO₄. In the formulas stated above, A is Ni, Co, Mn, or a combination thereof; B' is Al, Ni, Co, Mn, Cr, Fe, Mg, Sr, V, a rare earth element, or a combination thereof; D' is O, F, S, P, or a combination thereof; E is Co, Mn, or a combination thereof; F' is F, S, P, or a combination thereof; G is Al, Cr, Mn, Fe, Mg, La, Ce, Sr, V, or a combination thereof; Q is Ti, Mo, Mn, or a combination thereof; I' is Cr, V, Fe, Sc, Y, or a combination thereof; and J is V, Cr, Mn, Co, Ni, Cu, or a combination thereof. For example, the cathode active material may include one or more of lithium cobalt oxide, lithium nickel oxide, lithium nickel cobalt oxide, lithium nickel cobalt aluminum oxide, lithium nickel cobalt manganese oxide, lithium manganese oxide, lithium iron phosphate, nickel sulfide, copper sulfide, lithium sulfide, iron oxide, or vanadium oxide. For example, the cathode active material may be LiCoO₂, LiMnₓO₂ₓ (where x=1, 2), LiNi₁₋ₓMnₓO₂ₓ (where 0<x<1), LiNi_{1-x-y}CoₓMn_{y}O₂ (where 0≤x≤0.5 and 0≤y≤0.5), LiFePO₄, TiS₂, FeS₂, TiS₃, or FeS₃.

For example, the cathode active material includes a lithium salt of a transition metal oxide having a layered rock salt type structure. The "layered rock salt type structure" refers to a structure in which an oxygen atom layer and a metal atom layer are alternately and regularly arranged in a <111> direction in a cubic rock salt type structure, whereby each of the atom layers forms a two-dimensional flat plane. The "cubic rock salt type structure" refers to a sodium chloride (NaCl) type structure, which is one of the crystalline structures, in particular, to a structure in which face-centered cubic (fcc) lattices respectively formed of anions and cations that are shifted by only a half of the ridge of each unit lattice. The lithium transition metal oxide having the layered rock-salt type structure may include a ternary lithium transition metal oxide expressed as LiNiₓCo_{y}Al_{z}O₂ (NCA) or LiNiₓCo_{y}Mn_{z}O₂ (NCM) (where 0 < x < 1, 0 < y < 1, 0 < z < 1, and x + y + z = 1). When the cathode active material includes a ternary transition metal oxide having the layered rock salt type structure, an energy density and thermal stability of the all-solid-state secondary battery 200 may improve.

A coating layer may be disposed on the cathode active material. The coating layer may be any suitable material that is known as a coating layer of a cathode active material of the all-solid-state secondary battery 200. The coating layer may be, for example, Li₂O-ZrO₂.

When the cathode active material includes nickel (Ni) as a ternary lithium transition metal oxide such as NCA or NCM, a capacity density of the all-solid-state secondary battery 200 may increases, and thus metal elution from the cathode active material during charging may be reduced. As a result, the cycle characteristics of the all-solid-state secondary battery 200 during charging may improve.

The cathode active material may have, for example, a particle shape, such as a true spherical shape or an elliptical shape. A particle diameter of the cathode active material is not particularly limited and may be in a suitable range useful in the general all-solid-state secondary battery 200. An amount of the cathode active material in the cathode 10 is not particularly limited and may be in a suitable range useful in the cathode 10 of the general all-solid-state secondary battery 200.

The cathode active material layer may further include an ionic liquid electrolyte. The ionic liquid electrolyte may be non-volatile. The ionic liquid has a melting point below room temperature, and refers to a salt in a liquid state at room temperature composed of ions alone or a room temperature molten salt. The ionic liquid may be a compound including a) at least one cation of an ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, or a mixture thereof, and b) at least one anion of BF₄⁻, PF₆⁻, AsF₆₋, SbF₆⁻, AlCl₄⁻; HSO4⁻, ClO₄⁻, CH₃SO₃⁻, CF₃CO₂⁻, Cl⁻, Br⁻, I⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻. An ionic liquid may be, for example, one or more of N-methyl-N-propylpyrrolidinium bis(trifluoromethanesulfonyl) imide N-butyl-N-methylpyrrolidium bis(3-trifluoromethylsulfonyl) imide, 1-butyl-3-methylimidazolium bis(trifluoromethylsulfonyl) imide, or 1-ethyl-3-methylimidazolium bis(trifluoromethylsulfonyl) imide. An ionic liquid polymer may contain a repeating unit including a) one or more cations of an ammonium-based cation, a pyrrolidinium-based cation, a pyridinium-based cation, a pyrimidinium-based cation, an imidazolium-based cation, a piperidinium-based cation, a pyrazolium-based cation, an oxazolium-based cation, a pyridazinium-based cation, a phosphonium-based cation, a sulfonium-based cation, a triazolium-based cation, or a mixture thereof, and b) one or more anions of BF₄⁻, PF₆⁻, AsF₆⁻, SbF₆⁻, AlCl₄⁻, HSO₄⁻, ClO₄⁻, CH₃SO₃⁻, CF₃CO₂⁻, (CF₃SO₂)₂N⁻, (FSO₂)₂N⁻, Cl⁻, Br⁻, I⁻, SO₄⁻, CF₃SO₃⁻, (C₂F₅SO₂)₂N⁻, (C₂F₅SO₂)(CF₃SO₂)N⁻, NO₃⁻, Al₂Cl₇⁻, (CF₃SO₂)₃C⁻, (CF₃)₂PF₄⁻, (CF₃)₃PF₃⁻, (CF₃)₄PF₂⁻, (CF₃)₅PF⁻, (CF₃)₆P⁻, SF₅CF₂SO₃⁻, SF₅CHFCF₂SO₃⁻, CF₃CF₂(CF₃)₂CO⁻, (CF₃SO₂)₂CH⁻, (SF₅)₃C⁻, or (O(CF₃)₂C₂(CF₃)₂O)₂PO⁻.

The ionic liquid electrolyte may be disposed in pores on the surface of the solid electrolyte in contact with the cathode active material layer. An amount of the ionic liquid electrolyte may be 0.1 to 20 parts by weight, 0.1 to 15 parts by weight, 0.1 to 10 parts by weight, or 0.1 to 5 parts by weight, on the basis of 100 parts by weight of the cathode active material layer not including the ionic liquid electrolyte. By including the ionic liquid electrolyte, ionic conductivity can be improved, thereby improving the charging and discharging characteristics of the battery.

The cathode active material layer may include a conductive material and a binder. For example, the conductive material may include carbon black, carbon fiber, graphite, or a combination thereof. The carbon black may be, for example, acetylene black, ketjen black, Super P carbon, channel black, furnace black, lamp black, thermal black, or a combination thereof. The graphite may be natural graphite or artificial graphite. Combinations including at least two of the foregoing may be used. The cathode active material layer may include conductive materials of different compositions in addition to the conductive materials described above. The additional conductive material may be: electrically conductive fibers such as metal fibers; fluorocarbon powder; metal powder such as aluminum powder, or nickel powder; conductive whiskers such as zinc oxide or potassium titanate; polyethylene derivatives; or a combination thereof. The conductive material may have a conductivity of at least 10⁻² siemens per centimeter (S/cm). An amount of the conductive material may be in a range of about 1 to about 10 parts by weight, for example, about 2 to about 7 parts by weight, on the basis of 100 parts by weight of the cathode active material. When the amount of the conductive material is within this range, for example, about 1 to about 10 parts by weight, the electrical conductivity of the cathode may be adequate.

The binder can improve the adhesion between components of the cathode 10 and the adhesion to a cathode current collector. Examples of the binder may include polyacrylic acid (PAA), polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM), sulfonated EPDM, styrene-butadiene-rubber, fluorinated rubber, copolymer thereof, or combinations thereof. An amount of the binder may be in a range of about 1 to about 10 parts by weight, for example, in a range of about 2 to about 7 parts by weight, on the basis of 100 parts by weight of the positive electrode active material. When the amount of the binder is within this range, the adhesion of a cathode active material layer to a cathode current collector may be improved, and decreases in the energy density of the cathode active material layer can be suppressed.

As a solvent, N-methylpyrrolidone, acetone, or water may be used. The amounts of the cathode active material, the conductive material, the binder, and the solvent are at levels commonly used in lithium batteries.

A plasticizer may be added to the cathode active material composition to form pores inside the cathode active material layer.

The cathode 10 may include a solid electrolyte. The solid electrolyte included in the cathode 10 may be similar to or different from the solid electrolyte included in the solid electrolyte 30. For detailed contents about the solid electrolyte, reference can be made to the content of the solid electrolyte 30. The solid electrolyte included in the cathode 10 may be, for example, a sulfide solid electrolyte. As the sulfide solid electrolyte, a sulfide-based electrolyte used in the solid electrolyte 30 may be used.

### Method of Preparing All-Solid-State Battery

A method of preparing an all-solid-state battery according to another embodiment includes: providing a porous current collector 20 having a plurality of internal pores 22, a first side, and an opposite second side; disposing an elastic polymer 23 containing composition on the first surface of the porous current collector 20 to form a coated current collector; drying the coated current collector to form an elastic layer 21 containing the elastic polymer 23 and disposed on the first side of the porous current collector to prepare a porous current collector-elastic layer electrode and the porous current collector-elastic layer electrode is an anode 40 including an elastic polymer in at least one internal pore of the plurality of internal pores 22 of the porous current collector; providing a solid electrolyte 30; disposing the solid electrolyte 30 on the opposite second side of the porous current collector of the porous current collector-elastic layer electrode to prepare an electrode-solid electrolyte sub-assembly ; and disposing a cathode 10 on the porous current collector on the opposite side of the solid electrolyte 30 of the porous current collector-elastic layer electrode to prepare the all-solid-state battery.

First, the step of providing the porous current collector 20 having a first side and an opposite second side may be performed using laser drilling or punching. In this manner, a porous current collector having a pattern of pores including a pore diameter S and an interval I between two adjacent pores can be prepared. The porous current collector may be a three-dimensional porous current collector. The ratio S/I of a pore diameter S to an interval I between two adjacent pores may be 0.1 to 0.9. The three-dimensional porous current collector can increase the capacity and energy density of an all-solid-state battery. If the ratio S/I of the pore diameter to the interval between pores is in the range stated above, excellent contact between a porous current collector and an electrode active material can be maintained (during charging), thereby providing an all-solid-state battery having low interfacial resistance and excellent charging and discharging characteristics.

Separately, an elastic polymer containing composition can be prepared. The elastic polymer containing composition can include the elastic polymer and a solvent. The elastic polymer can include a copolymer having at least one hard structural unit and at least one soft structural unit, and the weight ratio of the hard structural unit to the soft structural unit may be 0.1 to 1. The solvent may be an organic solvent and may include, for example, dimethylformamide (DMF), N-methyl-2-pyrrolidone (NMP), or a mixture thereof. The elastic polymer containing composition may include about 1 to 5 % by weight of the elastic polymer based on the total weight of the elastic polymer containing composition.

Next, the elastic layer 21 including the elastic polymer 23 can be formed on the first side of the porous current collector 20 by disposing an elastic polymer containing composition on the porous current collector 20 to provide a coated current collector and drying the coated current collector to form an elastic layer disposed on the first side of the porous current collector to prepare a porous current collector-elastic layer electrode including the elastic polymer 23. The elastic polymer 23 can be disposed in at least one internal pore of the plurality of internal pores of the porous current collector.

Any known application method can be used as a method for applying the elastic polymer containing composition to the porous current collector 20, but applying and curing may be performed by, for example, a solution process such as spin coating. The elastic polymer containing composition may include, for example, a curing agent. Spin coating may be performed at a speed of about 500 to 1500 revolutions per minute (rpm) for about 10 to about 60 seconds. Drying may be done under reduced pressure (e.g., less than atmospheric pressure) at a temperature of about 60°C to 100°C for 30 minutes to 2 hours.

Separately, the solid electrolyte 30 can be prepared. As the solid electrolyte, a solid electrolyte molded body can be prepared. The solid electrolyte molded body may be prepared by, for example, heat treating a solid electrolyte material, such as a precursor including an oxide solid electrolyte material.

The oxide solid electrolyte may be prepared by combining precursor materials in a stoichiometric amount to form a mixture, and heat-treating the mixture. The combining may include, for example, milling such as ball milling, or grinding. The mixture of precursor materials may be subjected to primary heat treatment in an oxidizing atmosphere to prepare a primarily heat-treated product. The primary heat treatment may be performed for 1 hour to 36 hours at a temperature less than 1000 °C. The primarily heat-treated product may be milled. The milling of the primarily heat-treated product may be performed in a dry or wet process. Wet milling may be performed, for example, by mixing a solvent such as methanol with the primarily heat-treated product and then milling the product using a ball mill, etc., for 0.5 to 10 hours. Dry milling may be performed by milling with a ball mill, etc., without a solvent. The average particle diameter of the milled primarily heat-treated product may be 0.1 µm to 10 µm or 0.1 µm to 5 µm. The milled primarily heat-treated product may be dried. The milled primarily heat-treated product may be mixed with a binder solution and formed into pellets, or simply pressed at a pressure of 1 to 10 tons to form pellets. The molded body may be subjected to secondary heat treatment at a temperature less than or equal to 1000° C for 1 hour to 36 hours. Through the secondary heat treatment, a sintered solid electrolyte molded body 11 may be obtained. The secondary heat treatment may be performed, for example, at 550 °C to1000 °C. The secondary heat treatment time may be 1 hour to 36 hours. To obtain the sintered product, the secondary heat treatment temperature may be greater than the primary heat treatment temperature. For example, the secondary heat treatment temperature may be 10°C or greater, 20°C or greater, 30°C or greater, or 50°C or greater than the primary heat treatment temperature. The molded product may be subjected to secondary heat treatment in one or more of an oxidizing atmosphere or a reducing atmosphere. The secondary heat treatment may be performed in a) an oxidizing atmosphere, b) a reducing atmosphere, or c) an oxidizing atmosphere and a reducing atmosphere. Alternatively, an oxide solid electrolyte may be prepared using a tape casting method. For example, an oxide solid electrolyte slurry can be prepared by mixing oxide solid electrolyte powder with a binder and a solvent. The oxide solid electrolyte slurry can be ball-milled for 12 hours to 24 hours and aged for 1 hour to 4 hours. The aged oxide solid electrolyte slurry can be poured onto a doctor blade set at a predetermined height, and a PET substrate film can be moved at a speed of 1.0 meter per minute (m/min) to 3.0 m/min to perform tape casting, thereby preparing a green sheet with a thickness of several tens of micrometers. The green sheet can be sintered at a temperature of 1000 °C to 1350 °C through stacking, pressing, and cutting, to provide a sintered body. By placing the sintered body in a mold and applying pressure thereto, a solid electrolyte molded body with a thickness of several hundred micrometers can be prepared.

The solid electrolyte 30 may have undergone surface treatment. Examples of the surface treatment may include chemical treatment, electropolishing, wet polishing, argon plasma etching, oxygen plasma cleaning, annealing, or exposure to high vacuum. For example, acid treatment may be used as the chemical treatment. For example, the acid treatment may be performed at a concentration of 0.1 moles per liter (M) to 10 M for 30 minutes to 1 hour. For example, the acid treatment may be performed with hydrochloric acid at a concentration of 0.1 M to 1 M for 30 minutes to 1 hour. After the acid treatment, the surface-treated solid electrolyte 30 may be obtained by washing with a basic or neutral compound, for example, ethanol, and then drying. In the surface-treated solid electrolyte 30, an electrode active material may penetrate into the surface thereof (during charging), and a contact area with the solid electrolyte 30 may increase, thereby reducing interfacial resistance.

After preparing the porous current collector-elastic layer anode 40, an intermediate layer 25 may be disposed on the opposite second side (solid electrolyte side) of the porous current collector 20.The intermediate layer 25 may include: a carbon-containing material; a mixture of the carbon-containing material and one or more of a metal or a metalloid; a composite of the carbon-containing material and one or more of the metal or the metalloid; or a combination thereof. Since the specific details of the carbon-containing material, the metal and the metalloid, mixtures, and composites thereof are the same as described above, the descriptions will be omitted below.

Next, the porous current collector-elastic layer anode 40 can be bonded to the solid electrolyte 30 to prepare the electrode-solid electrolyte sub-assembly 100.

Placement and bonding of the intermediate layer may be performed through pressing or compression.

The pressure applied during pressing or compression may be, for example, 150 MPa or greater. The pressure applied during pressing may be, for example, 250 MPa or greater. The pressure applied during pressing or compression may be, for example, 1000 MPa or less, for example, 150 MPa to 10,000 MPa, 300 MPa to 5,000 MPa, or 500 MPa to 2,000 MPa.

The time in which the pressure is applied may be less than or equal to 10 minutes. For example, the time in which the pressure is applied may be 5 milliseconds (ms) to 10 minutes (min). For example, the time in which the pressure is applied may be 2 min to 7 min.

The pressing may be carried out, for example, at room temperature (25 °C). The pressing may be carried out, for example, at 15 °C to 25 °C. However, the pressing temperature is not necessarily limited thereto, and may be 25 °C to 90 °C or a high temperature of 100 °C or greater, for example, 100 °C to 500 °C.

The pressing may be, for example, but not limited to, roll pressing, uni-axial pressing, flat pressing, warm isotactic pressing (WIP), or cold isotactic pressing (CIP), and any pressing method used in the relevant technical field can be used.

Next, the cathode 10 can be placed on the opposite side of the solid electrolyte 30 in contact with the porous current collector-elastic layer anode 40.

A slurry can be prepared by adding a cathode active material, a binder, etc., which are the materials for forming the cathode active material layer, to a non-polar solvent. The prepared slurry can be applied on a cathode current collector and dried. The obtained laminate can be pressed to prepare the cathode 10. The pressing may be, for example, but not limited to, roll pressing, flat pressing, pressing using hydrostatic pressure, etc., and any pressing method used in the relevant technical field can be used. The pressing process may be omitted. The cathode 10 can be prepared by compacting and molding the mixture of materials for forming the cathode active material layer into a pellet form or stretching (molding) the same into a sheet form. When the cathode 10 is prepared in this way, the cathode current collector may be omitted. Alternatively, the cathode 10 may be used by impregnating the same with an electrolyte solution.

Next, a metal layer 24 can be disposed between the first side of the porous current collector and the elastic layer by disposing the metal layer 24 on the first surface of the porous current collector (opposite the surface of the solid electrolyte) before applying the elastic polymer containing composition on the first surface (opposite to the solid electrolyte) of the porous current collector. Since the type and forming method of the metal layer 24 are the same as described above, the description thereof will be omitted below.

Hereinafter, examples and comparative examples of the present invention will be described. However, the following examples are only examples of the present invention, and the present invention is not limited to the following examples.

### EXAMPLES

### Preparation of All-Solid-State Secondary Batteries

### Example 1: All-Solid-State Secondary Battery

### Preparation of Anode-Solid Electrolyte Sub-Assembly

A solution containing a 5.0 wt% elastic polymer was prepared by dissolving a copolymer of styrene-ethylene-butylene-styrene (SPIN ON GLASS COATER, ANSWORLD CO., LTD.), represented by Formula A and having a styrene structural unit that is a hard structural unit and an ethylene structural unit and a butylene structural unit that are soft structural units, (y/x+z), at a weight ratio of 0.88 in dimethyl formamide.

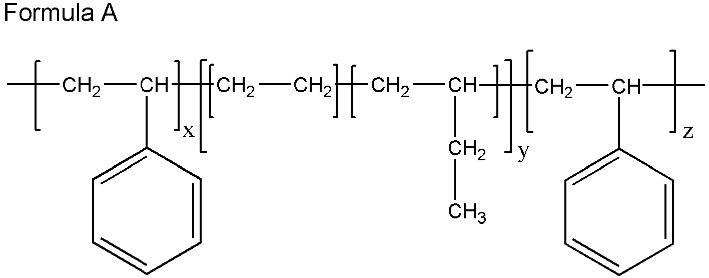

Separately, a copper form (Cu form) (porosity: 77 %, thickness: 20 µm) was subjected to a laser drilling process to prepare a three-dimensional porous anode current collector with pore sizes and intervals of a uniform pattern and having a first side and an opposite second side.

A 20 µm thick elastic polymer layer was formed on the first side of the three-dimensional porous current collector (opposite to the solid electrolyte side) by coating the elastic polymer-containing solution on the top and inside of the three-dimensional porous anode current collector for 60 seconds at a speed of 1500 rpm using a spin coater in the opposite direction to the solid electrolyte side and drying at 80 °C for 1 hour under reduced pressure, and a porous current collector-elastic layer anode was prepared with about 85 % by volume of the plurality of internal pores filled with the elastic polymer based on the total volume of the plurality of internal pores in a concentration gradient decreasing direction from the first side to the opposite second side (the solid electrolyte side) of the three-dimensional porous anode current collector.

Separately, solid electrolyte pellets of Li_{6.5}La₃Zr_{1.5}Ta_{0.5}O₁₂ (LLZTO, Toshima Co.) with a thickness of 500 µm and a diameter of 14 millimeters (mm) were prepared. The LLZO solid electrolyte was acid treated with 1 M hydrochloric acid for 30 minutes, then washed with ethanol and dried in a drying room to provide a solid electrolyte layer of surface-treated Li_{6.5}La₃Zr_{1.5}Ta_{0.5}O₁₂ solid electrolyte pellets.

Separately, carbon black powder (99.7 % purity, D50: 38 nm, Asahi carbon) and silver (Ag) nanoparticles (D50: 60 nm) were mixed at a weight ratio of 1:3 in N-methylpyrrolidone (Sigma-Aldrich) with 7 % by weight of a polyvinylidene fluoride binder (Solvay) for 30 minutes at a speed of 1000 rpm using a mixer (AR-100, Thinky Corporation). The mixture was coated on a 10 µm thick stainless steel (SUS) foil using a screen printer and dried at 80 °C for 20 minutes in an air atmosphere to form an Ag-C layer. The Ag-C layer was further dried at 100 °C for 12 hours in a vacuum atmosphere.

Cold isostatic pressing was performed at a temperature of 25 °C and a pressure of 250 MPa to compress the dried Ag-C layer as an intermediate layer on the surface-treated Li_{6.5}La₃Zr_{1.5}Ta_{0.5}O₁₂ solid electrolyte pellets. After peeling off the SUS foil from the stainless steel (SUS) foil coated with the Ag-C layer, the three-dimensional porous anode current collector was subjected to cold isostatic pressing on the Ag-C layer at a temperature of 25°C and a pressure of 250 MPa, thereby preparing an anode-solid electrolyte sub-assembly.

### Preparation of Cathode

LiNi_{0.33}Co_{0.33}Mn_{0.33}O₂ (NCM, loading amount: 3.2 grams per cubic centimeter (g/cc), Samsung SDI) was prepared as a cathode active material. In addition, a polytetrafluoroethylene (DuPont, Teflon^{®}) binder was prepared as a binder. In addition, carbon nanofibers (CNF) were prepared as a conductive material. Then, these materials were mixed at a weight ratio of cathode active material:conductive material:binder of 96:2:2. The mixture was stretched into a sheet form to prepare a cathode active material sheet with a thickness of approximately 50 µm. Then, a cathode was prepared by pressing the cathode active material sheet onto a 9 µm thick aluminum foil (Nippon Foil Mfg. Co., Ltd) cathode current collector.

The cathode active material sheet of the prepared cathode was impregnated in an electrolyte solution in which 2.0 M of lithium bis(fluorosulfonyl) imide [(LiFSI, 99.9 % purity, moisture content < 10 parts per million (ppm)] as a lithium salt was dissolved in N-methyl-N-propyl-pyrrolidinium bis(fluorosulfonyl) imide (PYR13FSI, 99.9 % purity, Kanto Chemical Co. Inc.) as an ionic liquid in a drying room, and placed under reduced pressure for 2 hours. Residual liquid on the cathode surface was removed using Kimwipes.

### Preparation of All-Solid-State Secondary Battery

The cathode impregnated in the electrolyte solution was placed on the anode-solid electrolyte sub-assembly (such that the solid electrolyte was disposed between the cathode and the anode) in a single-layer pouch cell and sealed under reduced pressure, thereby preparing an all-solid-state secondary battery. The cathode and the anode were insulated with an insulator. Parts of the cathode current collector and the anode current collector were allowed to protrude outside the sealed battery and used as cathode layer terminals and anode layer terminals, respectively.

### Example 2: All-Solid-State Secondary Battery

An all-solid-state secondary battery was manufactured in the same manner as in Example 1, except that a 80 µm thick elastic polymer layer was formed on the first side (opposite to the solid electrolyte side) of the three-dimensional porous current collector by coating the 25.0 wt% elastic polymer-containing solution on the top and inside of the three-dimensional porous anode current collector for 30 seconds at a speed of 1000 rpm using a spin coater in the opposite direction to the solid electrolyte side and drying at 80 °C for 1 hour under reduced pressure, and a porous current collector-elastic layer anode was prepared, in which about 55 % by volume of the plurality of internal pores were filled with the elastic polymer based on the total volume of the plurality of internal pores in a concentration gradient decreasing in a direction from the first side to the opposite second side (the solid electrolyte side) of the three-dimensional porous anode current collector.

### Example 3: All-Solid-State Secondary Battery

An all-solid-state secondary battery was manufactured in the same manner as in Example 1, except that a solution containing a 7.5 wt% elastic polymer was prepared by dissolving a copolymer of styrene-ethylene-butylene-styrene (SPIN ON GLASS COATER, ANSWORLD CO., LTD), represented by Formula A and having a styrene structural unit that is a hard structural unit and an ethylene structural unit and a butylene structural unit that are soft structural units, (y/x+z), at a weight ratio of 0.88 in dimethylformamide.

A 30 µm thick elastic polymer layer was formed on the first side (opposite to the solid electrolyte side) of the three-dimensional porous current collector by coating the elastic polymer-containing solution on the top and inside of the three-dimensional porous anode current collector for 60 seconds at a speed of 1500 rpm using a spin coater in the opposite direction to the solid electrolyte side and drying at 80 °C for 1 hour under reduced pressure, and a porous current collector-elastic layer anode was prepared, in which about 85 % by volume of the plurality of internal pores were filled with the elastic polymer based on the total volume of the plurality of internal pores in a concentration gradient decreasing in a direction from the first side to the opposite second side (the solid electrolyte side) of the three-dimensional porous anode current collector.

### Example 4: All-Solid-State Secondary Battery

An all-solid-state secondary battery was manufactured in the same manner as in Example 1, except that a 50 µm thick elastic polymer layer was formed on the first side (opposite to the solid electrolyte side) of the three-dimensional porous current collector by coating the 15.0 wt% elastic polymer-containing solution on the top and inside of the three-dimensional porous anode current collector for 30 seconds at a speed of 1000 rpm using a spin coater in the opposite direction to the solid electrolyte side and drying at 80 °C for 1 hour under reduced pressure, and a porous current collector-elastic layer anode was prepared, in which about 55 % by volume of the plurality of internal pores were filled with the elastic polymer based on the total volume of the plurality of internal pores in a concentration gradient decreasing in a direction from the first side to the opposite second side (the solid electrolyte side) of the three-dimensional porous anode current collector.

### Example 5: All-Solid-State Secondary Battery

An all-solid-state secondary battery was manufactured in the same manner as in Example 1, except that a solution containing a 5.0 wt% elastic polymer was prepared by dissolving a copolymer of styrene-ethylene-butylene-styrene (SPIN ON GLASS COATER, ANSWORLD CO., LTD.), represented by Formula A and having a styrene structural unit that is a hard structural unit and an ethylene structural unit and a butylene structural unit that are soft structural units, (y/x+z), at a weight ratio of 0.80 in dimethyl formamide.

### Example 6: All-Solid-State Secondary Battery

An all-solid-state secondary battery was manufactured in the same manner as in Example 1, except that a solution containing a 5.0 wt% elastic polymer was prepared by dissolving a copolymer of styrene-ethylene-butylene-styrene (SPIN ON GLASS COATER, ANSWORLD CO., LTD.), represented by Formula A and having a styrene structural unit that is a hard structural unit and an ethylene structural unit and a butylene structural unit that are soft structural units, (y/x+z), at a weight ratio of 0.78 in dimethyl formamide.

### Example 7: All-Solid-State Secondary Battery

An all-solid-state secondary battery was manufactured in the same manner as in Example 1, except that a solution containing a 5.0 wt% elastic polymer was prepared by dissolving a copolymer of styrene-ethylene-butylene-styrene (SPIN ON GLASS COATER, ANSWORLD CO., LTD.), represented by Formula A and having a styrene structural unit that is a hard structural unit and an ethylene structural unit and a butylene structural unit that are soft structural units, (y/x+z), at a weight ratio of 0.70 in dimethyl formamide.

### Comparative Example 1: All-Solid-State Secondary Battery

An all-solid-state secondary battery was prepared in the same manner as in Example 1, except that a porous current collector anode was prepared, in which internal pores of the three-dimensional porous current collector were not filled with elastic polymer, without forming an elastic polymer layer on the first side (opposite to the solid electrolyte side) of the three-dimensional porous current collector.

### Comparative Example 2: All-Solid-State Secondary Battery

An all-solid-state secondary battery was prepared in the same manner as in Example 1, except that a porous current collector anode with about 85 % by volume of the plurality of internal pores filled with the elastic polymer based on the total volume of the plurality of internal pores in a concentration gradient decreasing in a direction from the opposite second side (the solid electrolyte side) to the first side (opposite to the solid electrolyte side) of the three-dimensional porous anode current collector, was prepared by coating the elastic polymer-containing solution on the three-dimensional porous anode current collector for 10 seconds at a speed of 500 rpm using a spin coater in the direction of the solid electrolyte side and drying at 80 °C for 1 hour under reduced pressure.

### Comparative Example 3: All-Solid-State Secondary Battery

An all-solid-state secondary battery was prepared in the same manner as in Example 1, except that a solution containing a 10.0 wt % elastic polymer was prepared by dissolving a copolymer of styrene-ethylene-butylene-styrene (SPIN ON GLASS COATER, ANSWORLD CO., LTD.), represented by Formula A and having a styrene structural unit that is a hard structural unit and an ethylene structural unit and a butylene structural unit that are soft structural units, (y/x+z), at a weight ratio of 0.88 in dimethyl formamide.

A 50 µm thick elastic polymer layer was formed by coating the solution containing a 10.0 wt% elastic polymer on a copper foil using a doctor blade and drying at 80 °C for 1 hour under reduced pressure.

A porous current collector-elastic layer anode was prepared by bonding the elastic polymer layer on the first side (opposite to the solid electrolyte side) of the three-dimensional porous current collector.

### Evaluation Example 1: SEM Analysis

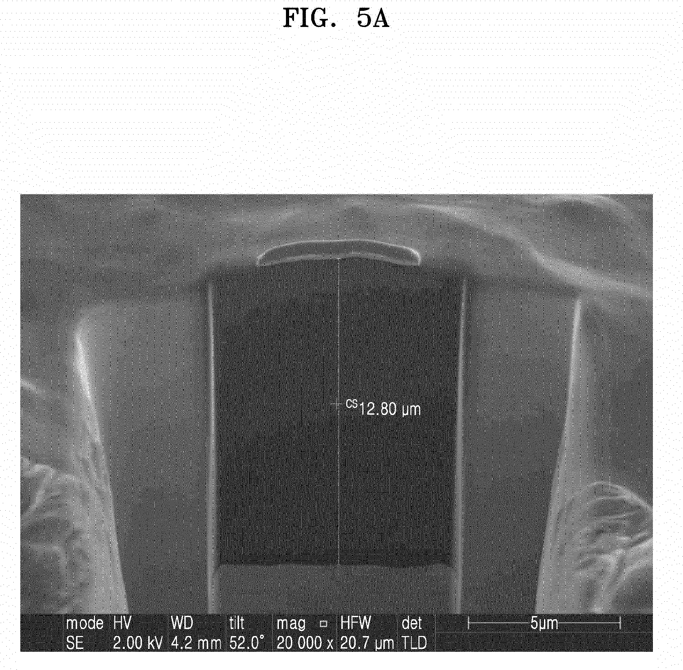

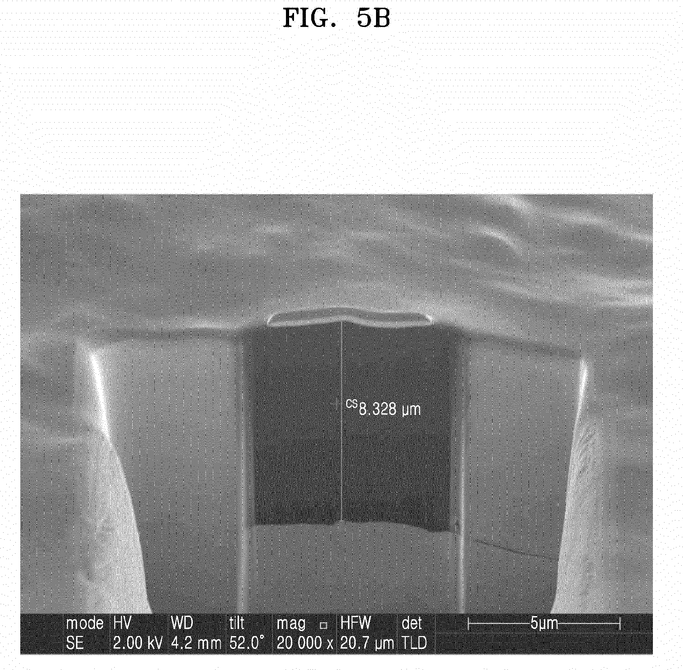

The all-solid-state secondary batteries prepared in Examples 1 and 2 were each disassembled, and a scanning electron microscope (SEM) analysis was performed on a three-dimensional porous anode current collector of an anode-solid electrolyte sub-assembly. The results are shown in FIGS. 5A and 5B, respectively. SEM analysis was performed using an S-4700 FE-SEM (Hitachi) analysis device in secondary electron (SE) mode, 2.00 kilovolts (kV) energy, and at 20,000× magnification.

Referring to FIGS. 5A and 5B, an elastic polymer was filled to depths of 12.8 µm and 8.3 µm, respectively of the total 15 µm depth of the internal pore, from the first side to the opposite second side of the three-dimensional porous anode current collectors included in the all-solid-state secondary batteries prepared in Examples 1 and 2, of the pores were filled to 85.3 % by volume and 55.3 % by volume, respectively.

### Evaluation Example 2: Interfacial Resistance Experiment

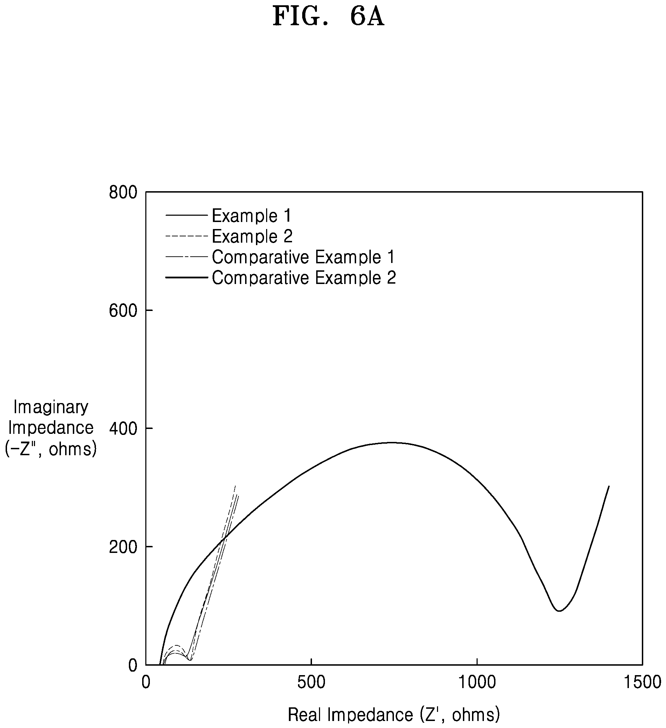

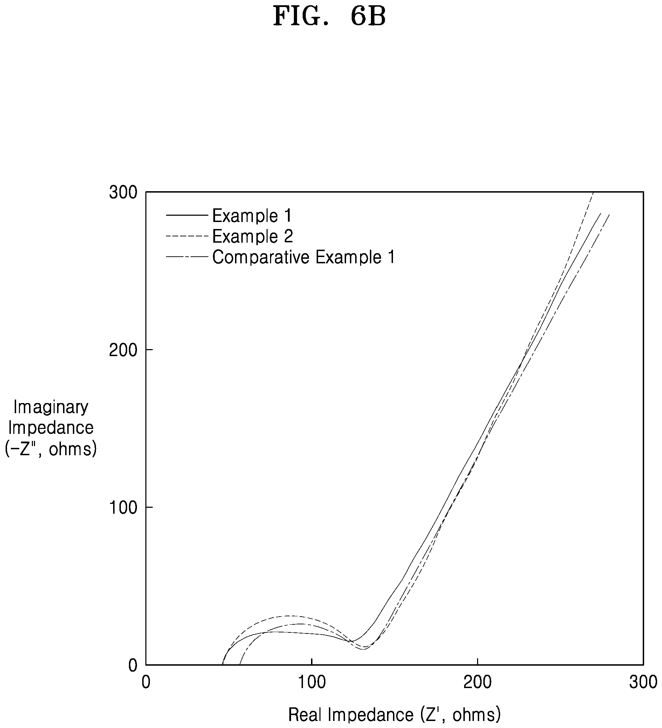

Impedance was measured using a two-probe method with respect to the all-solid-state secondary batteries prepared in Example 1, Example 2, Comparative Example 1, and Comparative Example 2, as analyzed at 25 °C in an air atmosphere using an impedance analyzer (Solartron 1400A/1455A impedance analyzer). Impedance measurement was performed at a frequency range of 0.1 hertz (Hz) to 1 mega hertz (MHz) and an amplitude voltage of 10 millivolts (mV). Nyquist plots according to the impedance measurement results are provided in FIGS. 6A and 6B. FIG. 6A illustrates the impedance results for the all-solid-state secondary batteries prepared in Example 1, Example 2, Comparative Example 1, and Comparative Example 2, and FIG. 6B is an enlarged view of the impedance results for the all-solid-state secondary batteries prepared in Example 1, Example 2, and Comparative Example 1 of FIG. 6A.

As a result of fitting the Nyquist plots of FIGS. 6A and 6B to an equivalent circuit, the interfacial resistances of the all-solid-state secondary batteries prepared in Example 1, Example 2, Comparative Example 1, and Comparative Example 2 were about 79 ohms-square centimeters (Ωcm²), 87 Ωcm², 75 Ωcm², and 1167 Ωcm², respectively.

Therefore, the interfacial resistances of the all-solid-state secondary batteries prepared in Examples 1 and 2 were less than the interfacial resistances of the all-solid-state secondary batteries manufactured in Comparative Example 2.

### Evaluation Example 3: Charging and Discharging Test (I)

Charging and discharging tests were performed on the all-solid-state secondary batteries prepared in Example 1, Example 2, Comparative Example 1, and Comparative Example 2 in a thermostatic bath at 25 °C.

In a first cycle, the batteries were charged at a constant current of 0.3 milliamps per square centimeter (mA/cm²) until the battery voltages reached 4.4 volts (V). Subsequently, discharging was performed at a constant current of 0.3 mA/cm² until the battery voltages reached 2.85 V.

In a second cycle, the batteries were charged at a constant current of 0.5 mA/cm² until the battery voltages reached 4.4 V. Subsequently, discharging was performed at a constant current of 0.5 mA/cm² until the battery voltages reached 2.85 V.

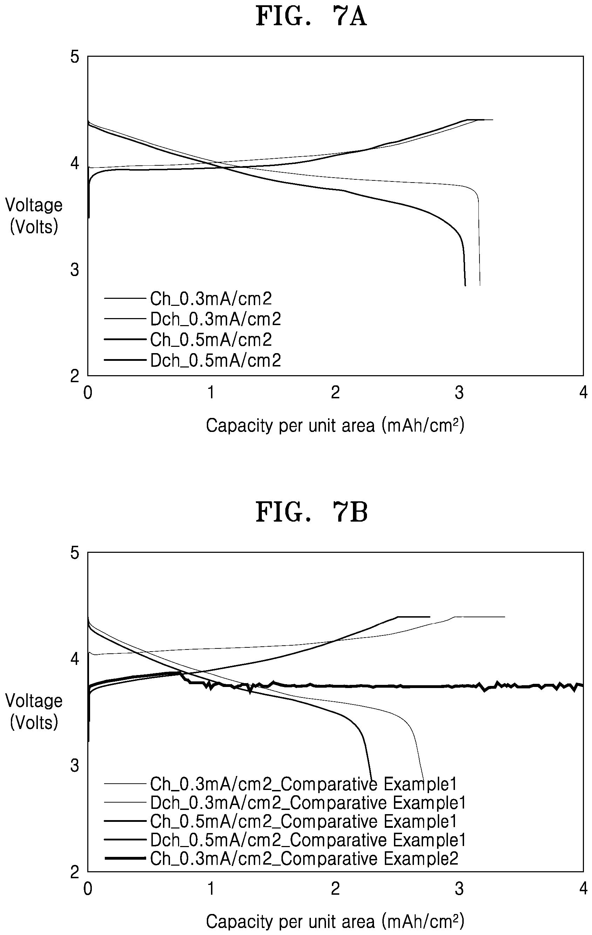

In all charge/discharge cycles, a stopping time of 1 minute was given after one charging/discharging cycle. The charging and discharging test results of the all-solid-state secondary battery prepared in Example 1 are shown in FIG. 7A, and the charging and discharging test results of the all-solid-state secondary batteries prepared in Comparative Examples 1 and 2 are shown in FIG. 7B. In addition, the results of charging/discharging efficiency (%) determined by calculating the ratio of charging capacity to discharging capacity in each cycle of the all-solid-state secondary batteries prepared in Example 1, Example 2, Comparative Example 1, and Comparative Example 2 are shown in Table 1.

**Table 1**

| Classification | | Charging/discharging efficiency (%) | |
|---|---|---|---|
| | 0.3 mA/cm² (@ 1 cycle) | | 0.5 mA/cm² (@ 2 cycles) |
| Example 1 | 97.8 | | 95.9 |
| Example 2 | 96.3 | | 94.9 |
| Comparative Example 1 | 77.6 | | 83.2 |
| Comparative Example 2 | NA | | - |

Referring to Table 1, the charging/discharging efficiency of each of the all-solid-state secondary batteries prepared in Examples 1 and 2 was greater than that of each of the all-solid-state secondary batteries prepared in Comparative Examples 1 and 2.

Referring to FIG. 7A, the all-solid-state secondary battery prepared in Example 1 showed a capacity per unit area of about 3.0 mAh/cm² to about 3.2 mAh/cm².

Referring to FIG. 7B, the all-solid-state secondary battery prepared in Comparative Example 1 showed a capacity per unit area of about 2.3 mAh/cm² to about 2.8 mAh/cm² during 2 cycles, and the all-solid-state secondary battery prepared in Comparative Example 2 could not operate even for 1 cycle.

Therefore, the all-solid-state secondary battery prepared in Example 1 demonstrated stable operation at a high capacity per unit area compared to the all-solid-state secondary batteries prepared in Comparative Examples 1 and 2.

### Evaluation Example 4: Charging and Discharging Test (II)

Charging and discharging tests were performed on the all-solid-state secondary batteries prepared in Example 1 and Comparative Example 1 in a thermostatic bath at 25 °C.

In a first cycle, the batteries were charged at a constant current of 0.3 mA/cm² until the battery voltages reached 4.4 V. Subsequently, discharging was performed at a constant current of 0.3 mA/cm² until the battery voltages reached 2.85 V.

In second and third cycles, the batteries were charged at a constant current of 0.5 mA/cm² until the battery voltages reached 4.4 V. Subsequently, discharging was performed at a constant current of 0.5 mA/cm² until the battery voltages reached 2.85 V.

In fourth and fifth cycles, the batteries were charged at a constant current of 1.0 mA/cm² until the battery voltages reached 4.4 V. Subsequently, discharging was performed at a constant current of 1.0 mA/cm² until the battery voltages reached 2.85 V.

In sixth to 40th cycles, the batteries were charged at a constant current of 1.6 mA/cm² until the battery voltages reached 4.4 V. Subsequently, discharging was performed at a constant current of 1.6 mA/cm² until the battery voltages reached 2.85 V.

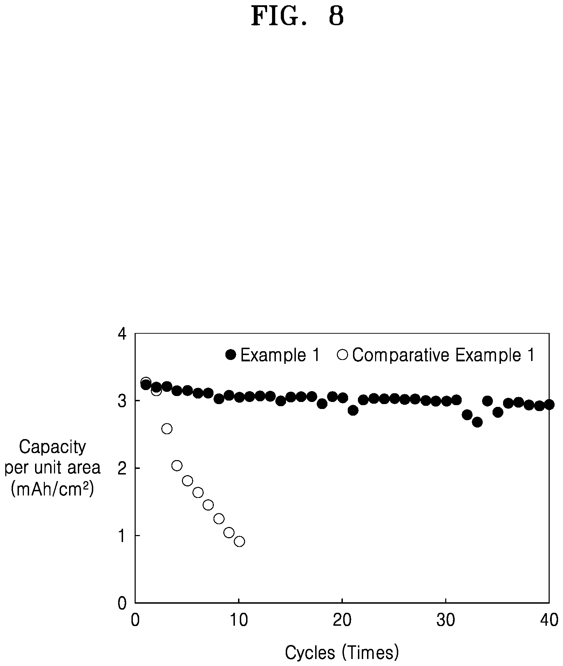

In all charge/discharge cycles, a stopping time of 1 minute was given after one charging/discharging cycle. The results of the charging and discharging tests are shown in FIG. 8.

Referring to FIG. 8, the all-solid-state secondary battery prepared in Example 1 operated at a stable capacity per unit area up to 40 cycles, and the ratio (%) of the discharge capacity in the first cycle to the discharge capacity in the 40th cycle, and the capacity retention rate calculated as the ratio (%) of the discharge capacity in the first cycle to the discharge capacity in the 40th cycle was about 91.1 %.

In comparison, the all-solid-state secondary battery prepared in Comparative Example 1 continuously decreased in capacity per unit area until the 10th cycle and was unable to operate thereafter.

Thus, the all-solid-state secondary battery prepared in Example 1 had improved lifespan characteristics compared to the all-solid-state secondary battery prepared in Comparative Example 1.

### Evaluation Example 5: Optical Microscope

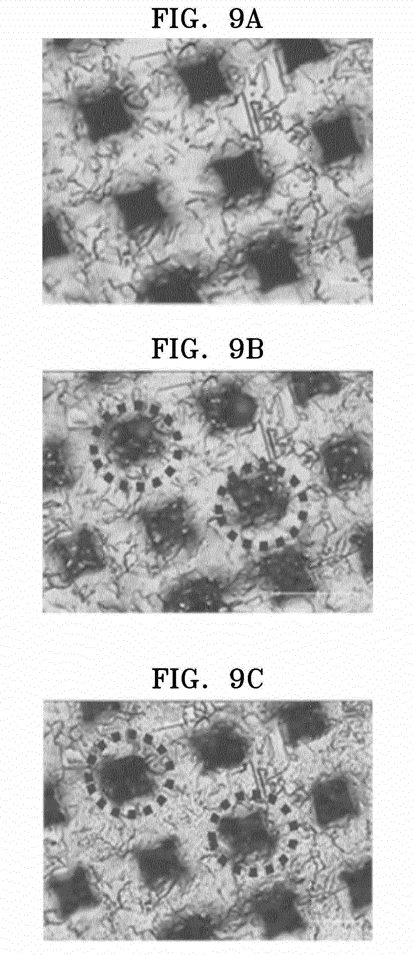

The all-solid-state secondary battery prepared in Example 1 was charged and discharged once at 0.2 C, wherein C refers to a C rate, i.e., a current which will discharge a charged battery in one hour, e.g., a C rate for a battery having a discharge capacity of 1.6 ampere-hours would be 1.6 amperes. Subsequently, the all-solid-state secondary battery was disassembled and the surface facing the laser-drilled copper form three-dimensional porous anode current collector was observed using an optical microscope. The optical microscope analysis results are shown in FIGS. 9A, 9B, and 9C. FIG. 9A is a two-fold magnified optical micrograph for a state, before charging, of the surface of a laser-drilled copper form three-dimensional porous anode current collector in an all-solid-state secondary battery prepared in Example 1. FIGS. 9B and 9C are two-fold magnified optical micrographs of a state of the surface of a laser-drilled copper form three-dimensional porous anode current collector in the all-solid-state secondary battery shown in FIG. 9A, after charging and discharging the all-solid-state secondary battery once at 0.2 C and disassembling.

Referring to the micrographs, it can be confirmed that lithium (the gray particles) was deposited in the form pores (a circular area indicated by a dotted line during charging) of the three-dimensional porous anode current collector of the all-solid-state secondary battery prepared in Example 1, and lithium was desorbed from the same pores during discharging.

From this, it was confirmed that the all-solid-state secondary battery prepared in Example 1 deposits/desorbs lithium in the pores of the three-dimensional porous current collector during charging and discharging.

A sub-assembly for an electrode-solid electrolyte according to an aspect comprises: an electrode including a porous current collector having a first side and an opposite second side , an elastic layer including an elastic polymer and disposed on the first side of the porous current collector; and a solid electrolyte disposed on the opposite second side of the porous current collector, wherein the porous current collector comprises a plurality of internal pores and the elastic polymer is disposed in at least one internal pore of the plurality of internal pores of the porous current collector. The electrode-solid electrolyte sub-assembly can maintain excellent contact between the porous current collector and the electrode active material (during charging), thereby providing an all-solid-state electrolyte battery with low interfacial resistance and superior charging and discharging characteristics.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

## Claims

1. A sub-assembly for an electrode-solid electrolyte, comprising:
an electrode comprising a porous current collector having a first side and an opposite second side;
an elastic layer comprising an elastic polymer and disposed on the first side of the porous current collector; and
a solid electrolyte disposed on the opposite second side of the porous current collector,
wherein the porous current collector comprises a plurality of internal pores and the elastic polymer is disposed in at least one internal pore of the plurality of internal pores of the porous current collector.

2. The sub-assembly for an electrode-solid electrolyte of claim 1, wherein the porous current collector has a porosity of 10 % by volume to 99 % by volume, based on a total volume of the porous current collector, and has an average pore diameter of 0.1 micrometers to 100 micrometers.

3. The sub-assembly for an electrode-solid electrolyte of claims 1 or 2, wherein the porous current collector is a three-dimensional porous current collector comprising a pore diameter S and an interval I between two adjacent pores, and a ratio S/I of the pore diameter to the interval is 0.1 to 0.9;
preferably wherein a horizontal cross-sectional shape of at least one of the pores of the three-dimensional porous current collector is circular, oval, triangular, square, rectangular, or hexagonal.

4. The sub-assembly for an electrode-solid electrolyte of any of claims 1-3, wherein the porous current collector comprises copper, nickel, silver, aluminum, stainless steel, titanium, iron, chromium, cobalt, or a combination thereof.

5. The sub-assembly for an electrode-solid electrolyte of any of claims 1-4, wherein the elastic polymer has a Young's modulus of 1 megapascals to 50 megapascals as measured in accordance with DMA (Dynamic Mechanical Analysis).

6. The sub-assembly for an electrode-solid electrolyte of any of claims 1-5, wherein the elastic polymer comprises a copolymer having at least one hard structural unit and at least one soft structural unit, and
a weight ratio of the hard structural unit to the soft structural unit is 0.1 to 1 ;
preferably wherein
the hard structural unit comprises a styrene structural unit, a urethane structural unit, an ether structural unit, or a combination thereof, and
the soft structural unit comprises an ethylene structural unit, a propylene structural unit, a butylene structural unit, an isobutylene structural unit, a butadiene structural unit, an isoprene structural unit, or a combination thereof.

7. The sub-assembly for an electrode-solid electrolyte of any of claims 1-6, wherein the elastic polymer comprises styrene-butadiene rubber, styrene-ethylene-butylene-styrene rubber, styrene-ethylene-propylene-styrene rubber, styrene-butadiene-styrene rubber, and styrene-isoprene-styrene rubber, styrene-isobutylene-styrene rubber, or a combination thereof; and/or
wherein the elastic polymer is disposed in the plurality of internal pores in a content of 10 % by volume to 90 % by volume, based on the total volume of the plurality of internal pores of the porous current collector.

8. The sub-assembly for an electrode-solid electrolyte of any of claims 1-7, wherein the elastic polymer is disposed in the plurality of internal pores with a concentration gradient decreasing in a direction from the first side to the opposite second side of the porous current collector, and the elastic polymer is disposed in the plurality of internal pores at 55 % by volume to 85 % by volume based on the total volume of the plurality of internal pores of the porous current collector.

9. The sub-assembly for an electrode-solid electrolyte of any of claims 1-8, wherein the elastic polymer further comprises an electronically conductive material having a conductivity of at least 10⁻² siemens per centimeter;
preferably wherein the electronically conductive material comprises carbon nanotubes, carbon nanofibers, carbon nanowires, carbon nanoparticles, or a combination thereof.

10. The sub-assembly for an electrode-solid electrolyte of any of claims 1-9, further comprising a metal layer disposed between the first side of the porous current collector and the elastic layer.

11. The sub-assembly for an electrode-solid electrolyte of any of claims 1-10, further comprising an intermediate layer disposed between the opposite second side of the porous current collector and the solid electrolyte,
wherein the intermediate layer comprises a carbon-containing material, a mixture of the carbon-containing material and at least one of a metal or a metalloid, a composite of the carbon-containing material and one or more of the metal or the metalloid, or a combination thereof;
preferably wherein
the carbon-containing material comprises amorphous carbon, and
the metal and the metalloid comprise indium, silicon, gallium, tin, aluminum, titanium, zirconium, niobium, germanium, antimony, bismuth, gold, platinum, palladium, magnesium, silver, zinc, nickel, iron, cobalt, chromium, cesium, sodium, potassium, calcium, yttrium, tantalum, hafnium, barium, vanadium, strontium, lanthanum, or a combination thereof.

12. The sub-assembly for an electrode-solid electrolyte of any of claims 1-11, wherein a thickness of the elastic layer is 10 micrometers to 100 micrometers.

13. The sub-assembly for an electrode-solid electrolyte of any of claims 1-12, wherein a combined thickness of the porous current collector and the elastic layer is 20 micrometers to 100 micrometers.

14. An all-solid-state battery comprising:
the electrode-solid electrolyte sub-assembly according to any of claims 1-13, wherein the electrode is an anode; and
a cathode;
wherein the solid electrolyte of the sub-assembly for an electrode-solid electrolyte is interposed between the anode and the cathode.

15. A method of preparing an all-solid-state battery, the method comprising:
providing a porous current collector having a first side and an opposite second side, wherein the porous current collector comprises a plurality of internal pores;
disposing an elastic polymer containing composition on the first side of the porous current collector to form a coated current collector;
drying the coated current collector to form an elastic layer comprising an elastic polymer and disposed on the first side of the porous current collector to prepare a porous current collector-elastic layer electrode including the elastic polymer, wherein the elastic polymer is disposed in at least one internal pore of the plurality of internal pores and the porous current collector-elastic layer electrode is an anode;
providing a solid electrolyte;
disposing the solid electrolyte on the opposite second side of the porous current collector of the porous current collector-elastic layer electrode to prepare a sub-assembly for an electrode-solid electrolyte; and
disposing a cathode on the opposite side of the solid electrolyte of the sub-assembly for an electrode-solid electrolyte to prepare the all-solid-state battery.
